(19) Europäisches Patentamt
European Patent Office
Office européen des brevets

(11) **EP 4 678 697 A1**

(12) **EUROPEAN PATENT APPLICATION**
published in accordance with Art. 153(4) EPC

(43) Date of publication:
**14.01.2026 Bulletin 2026/03**

(21) Application number: **24766904.7**

(22) Date of filing: **22.02.2024**

(51) International Patent Classification (IPC):
*C08L 75/04* (2006.01)          *C08G 18/00* (2006.01)
*C08G 18/08* (2006.01)          *C08G 18/12* (2006.01)
*C09D 5/02* (2006.01)          *C09D 175/04* (2006.01)

(52) Cooperative Patent Classification (CPC):
**C08G 18/00; C08G 18/08; C08G 18/12;
C08L 75/04; C09D 5/02; C09D 175/04**

(86) International application number:
**PCT/JP2024/006512**

(87) International publication number:
**WO 2024/185533 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.03.2023 JP 2023033127**

(71) Applicant: **Mitsui Chemicals, Inc.
Tokyo 104-0028 (JP)**

(72) Inventors:
• **NAKAGAWA, Toshihiko**
  **Sodegaura-shi, Chiba 299-0265 (JP)**
• **FUKUDA, Kazuyuki**
  **Sodegaura-shi, Chiba 299-0265 (JP)**
• **SUGIHARA, Tomoki**
  **Tokyo 104-0028 (JP)**
• **YAMADA, Yasuharu**
  **Sodegaura-shi, Chiba 299-0265 (JP)**

(74) Representative: **Hoffmann Eitle
Patent- und Rechtsanwälte PartmbB
Arabellastraße 30
81925 München (DE)**

(54) **POLYURETHANE DISPERSION, GAS BARRIER COATING MATERIAL, AND METHOD FOR PRODUCING POLYURETHANE DISPERSION**

(57)     A polyurethane dispersion contains a polyurethane resin. The polyurethane resin contains a reaction product of an isocyanate group-terminated prepolymer with a chain extender and/or an end-capping agent. The isocyanate group-terminated prepolymer contains a reaction product of a polyisocyanate component and an active hydrogen group-containing component. The active hydrogen group-containing component contains a polyol compound and an active hydrogen group-containing compound containing an anionic group. The anionic group is neutralized by a neutralizing agent. The neutralizing agent contains a monoamine compound having a primary amino group or a secondary amino group.

EP 4 678 697 A1

**Description**

TECHNICAL FIELD

The present invention relates to a polyurethane dispersion, a gas barrier coating material, and a method for producing a polyurethane dispersion.

BACKGROUND ART

Conventionally, it is known to apply a polyurethane dispersion onto the surface of a substrate and dry it to form a polyurethane layer. The polyurethane layer imparts various functionalities to the substrate. Examples of the functionalities include gas barrier properties and water resistance.

For example, a polyurethane dispersion obtained by the following method has been proposed. That is, first, 1,3-xylylene diisocyanate (XDI) and 4,4'-methylenebis(cyclohexyl isocyanate) ($H_{12}MDI$) are allowed to react with ethylene glycol (EG), trimethylolpropane (TMP), and dimethylol propionic acid (DMPA) to obtain an isocyanate group-terminated prepolymer. Next, triethylamine (TEA) is added to the isocyanate group-prepolymer to neutralize the isocyanate group-terminated prepolymer. Next, the isocyanate group-terminated prepolymer is dispersed in water, and the isocyanate group-terminated prepolymer and 2-((2-aminoethyl)amino)ethanol are subjected to a chain extension reaction in water. In this manner, a polyurethane dispersion containing a polyurethane resin is obtained (see, for example, Patent Document 1 (Synthesis Example 1)).

Citation List

Patent Document

Patent Document 1: International Publication No. WO2020/250768

SUMMARY OF THE INVENTION

PROBLEM TO BE SOLVED BY THE INVENTION

Meanwhile, polyurethane dispersions are required to have excellent storage stability.

The present invention is a polyurethane dispersion and a gas barrier coating material, which have excellent storage stability, and a method for producing a polyurethane dispersion.

MEANS FOR SOLVING THE PROBLEM

The present invention [1] includes a polyurethane dispersion including: a polyurethane resin, wherein the polyurethane resin contains a reaction product of an isocyanate group-terminated prepolymer with a chain extender and/or an end-capping agent, wherein the isocyanate group-terminated prepolymer contains a reaction product of a polyisocyanate component with an active hydrogen group-containing component, wherein the active hydrogen group-containing component contains a polyol compound and an active hydrogen group-containing compound containing an anionic group, wherein the anionic group is neutralized by a neutralizing agent, and wherein the neutralizing agent contains a monoamine compound having a primary amino group or a secondary amino group.

The present invention [2] includes the polyurethane dispersion described in the above-described [1], wherein in the monoamine compound, a total number of carbon atoms of a hydrocarbon group bonded to a primary amine group and a secondary amine group is 2-6.

The present invention [3] includes the polyurethane dispersion described in the above-described [1] or [2], wherein the polyurethane resin has a number-average molecular weight of 700 or more.

The present invention [4] includes the polyurethane dispersion described in any one of the above-described [1] to [3], wherein the polyurethane dispersion has a carbonate ion concentration of 700ppm or less.

The present invention [5] includes the polyurethane dispersion described in any one of the above-described [1] to [4], wherein the anionic group is a carboxy group.

The present invention [6] includes the polyurethane dispersion described in any one of the above-described [1] to [5], wherein a content ratio of the monoamine compound having a primary amino group or a secondary amino group is 25 mol% or more with respect to total moles of the neutralizing agent.

The present invention [7] includes the polyurethane dispersion described in any one of the above-described [1] to [6], wherein the polyisocyanate component contains bis(isocyanatomethyl)cyclohexane and/or xylylene diisocyanate, and wherein the polyol compound contains a short chain diol having 2 to 6 carbon atoms.

The present invention [8] includes the polyurethane dispersion described in any one of the above-described [1] to [7], wherein the polyurethane resin has a concentration of urethane and urea groups of 33% by mass or more and 42% by mass or less.

The present invention [9] includes a gas barrier coating material including: the polyurethane dispersion described in the above-described [7] or [8].

The present invention [10] includes a method for producing a polyurethane dispersion containing a polyurethane resin, the method including: a prepolymer synthesis step of reacting a polyisocyanate component with an active hydrogen group-containing component containing a polyol compound and an active hydrogen group-containing compound containing an anionic group to synthesize an isocyanate group-terminated prepolymer; a neutralization step of, after the prepolymer synthesis step, neutralizing the anionic group by a primary neutralizing agent containing a monoamine compound having a tertiary amino group; a chain extension step of, after the neutralization step, reacting the isocyanate group-terminated prepolymer with a chain extender to obtain a polyurethane resin; and a substitution step of, after the chain extension step, substituting at least a part of the primary neutralizing agent with a secondary neutralizing agent containing a monoamine compound having a primary amino group or a secondary amino group.

EFFECTS OF THE INVENTION

**In** the polyurethane dispersion and the gas barrier coating material of the present invention, the polyurethane resin contains a reaction product of an isocyanate group-terminated prepolymer with a chain extender and/or an end-capping agent. The isocyanate group-terminated prepolymer contains a reaction product of a polyisocyanate component and an active hydrogen group-containing component. The active hydrogen group-containing component contains a polyol compound and an active hydrogen group-containing compound containing an anionic group. The anionic group is neutralized by a neutralizing agent. The neutralizing agent contains a monoamine compound having a primary amino group or a secondary amino group.

As a result, the polyurethane dispersion and the gas barrier coating material of the present invention have excellent storage stability.

In the method for producing a polyurethane dispersion of the present invention, first, a polyisocyanate component is allowed to react with an active hydrogen group-containing component containing a polyol compound and an active hydrogen group-containing compound containing an anionic group to synthesize an isocyanate group-terminated prepolymer. Next, the anionic group is neutralized by a primary neutralizing agent containing a monoamine compound having a tertiary amino group. Next, the isocyanate group-terminated prepolymer is allowed to react with a chain extender to obtain a polyurethane resin. Thereafter, at least a part of the primary neutralizing agent is substituted with a secondary neutralizing agent containing a monoamine compound having a primary amino group or a secondary amino group.

As a result, according to the method for producing a polyurethane dispersion of the present invention, a polyurethane dispersion having excellent storage stability can be produced.

DESCRIPTION OF THE EMBODIMENTS

1. Polyurethane Dispersion

A polyurethane dispersion (PUD) contains a polyurethane resin. More specifically, the polyurethane dispersion (PUD) is an aqueous dispersion of a polyurethane resin.

(1) Polyurethane Resin

The polyurethane resin contains a reaction product of an isocyanate group-terminated prepolymer with a chain extender and/or an end-capping agent. Preferably, the polyurethane resin consists of a reaction product of an isocyanate group-terminated prepolymer with a chain extender and/or end-capping agent.

The isocyanate group-terminated prepolymer contains a reaction product of a polyisocyanate component and an active hydrogen group-containing component, and preferably consists of a reaction product of a polyisocyanate component and an active hydrogen group-containing component.

That is, a primary reaction product of a polyisocyanate component and an active hydrogen group-containing component is the isocyanate group-terminated prepolymer. A secondary reaction product of the isocyanate group-terminated prepolymer with a chain extender and/or an end-capping agent is the polyurethane resin.

Hereinafter, the secondary reaction product of the isocyanate group-terminated prepolymer with a chain extender may be referred to as an extended-type polyurethane resin. Furthermore, the secondary reaction product of the isocyanate group-terminated prepolymer with an end-capping agent may be referred to as a capped-type polyurethane resin. Furthermore, the secondary reaction product of the isocyanate group-terminated prepolymer with a chain extender and an end-capping agent may be referred to as an extended·capped composite polyurethane resin. Furthermore, the extended-type polyurethane resin, the capped-type polyurethane resin, and the extended·capped composite polyurethane resin may be collectively referred to as a polyurethane resin.

As detailed below, the polyurethane resin has an anionic group. The anionic group is neutralized by a neutralizing agent (described below). The neutralizing agent contains a monoamine compound having a primary amino group or a secondary amino group (described below).

Hereinafter, an extended-type polyurethane resin, a capped-type polyurethane resin, an extended·capped composite type polyurethane resin, and the production methods thereof are detailed.

(1-1) Extended-type Polyurethane Resin

[i] Prepolymer Synthesis Step

To obtain an extended-type polyurethane resin, first, a polyisocyanate component and an active hydrogen group-containing component are allowed to react to synthesize an isocyanate group-terminated prepolymer (prepolymer synthesis step).

The polyisocyanate component is not particularly limited, and examples thereof include polyisocyanates commonly used in industry. Examples of the polyisocyanates commonly used in industry include a chain aliphatic polyisocyanate, an alicyclic polyisocyanate, an aromatic polyisocyanate, and an araliphatic polyisocyanate. Examples of the chain aliphatic polyisocyanate include pentamethylene diisocyanate (PDI) and hexamethylene diisocyanate (HDI). Examples of the alicyclic polyisocyanate include isophorone diisocyanate (IPDI), norbornene diisocyanate (NBDI), methylene bis(cyclohexyl isocyanate) (hydrogenated diphenylmethane diisocyanate, $H_{12}$MDI), and bis(isocyanatomethyl)cyclohexane (hydrogenated xylylene diisocyanate, $H_6$XDI). Examples of the aromatic polyisocyanate include tolylene diisocyanate (TDI) and diphenylmethane diisocyanate (MDI). Examples of the araliphatic polyisocyanate include, for example, xylylene diisocyanate (XDI) and tetramethyl xylylene diisocyanate (TMXDI). Also, the polyisocyanates commonly used in industry may be a derivative. Examples of the derivative include, for example, a multimer, an isocyanurate-modified product, an allophanate-modified product, a polyol-modified product, a biuret-modified product, a urea-modified product, an oxadiazinetrione-modified product, and a carbodiimide-modified product. These may be used alone or in combination of two or more.

From the viewpoint of gas barrier properties, as the polyisocyanate component, preferably a bis(isocyanato-methyl)cyclohexane ($H_6$XDI) and a xylylene diisocyanate (XDI) are used, and more preferably a xylylene diisocyanate (XDI) is used. That is, from the viewpoint of gas barrier properties, the polyisocyanate component preferably contains bis(isocyanatomethyl)cyclohexane ($H_6$XDI) and/or xylylene diisocyanate (XDI), more preferably contains xylylene diisocyanate (XDI).

Examples of the xylylene diisocyanate (XDI) include 1,2-xylylene diisocyanate (o-XDI), 1,3-xylylene diisocyanate (m-XDI), and 1,4-xylylene diisocyanate (p-XDI). These may be used alone or in combination of two or more. As the xylylene diisocyanate (XDI), preferably 1,3-xylylene diisocyanate (m-XDI) and 1,4-xylylene diisocyanate (p-XDI) are used, and more preferably 1,3-xylylene diisocyanate (m-XDI) is used.

Furthermore, from the viewpoint of gas barrier properties, the polyisocyanate component preferably contains bis(isocyanatomethyl)cyclohexane and/or xylylene diisocyanate and another polyisocyanate. Examples of another polyisocyanate include the above-described polyisocyanates commonly used in industry, and polyisocyanates except for bis(isocyanatomethyl)cyclohexane and xylylene diisocyanate. The other polyisocyanates may be used alone or in combination of two or more.

From the viewpoint of gas barrier properties, as the other polyisocyanate, preferably an alicyclic polyisocyanate is used, more preferably methylene bis(cyclohexyl isocyanate) ($H_{12}$MDI) is used. That is, from the viewpoint of gas barrier properties, preferably, the polyisocyanate component contains bis(isocyanatomethyl)cyclohexane and/or xylylene diisocyanate and an alicyclic polyisocyanate, and more preferably contains bis(isocyanatomethyl)cyclohexane and/or xylylene diisocyanate and methylene bis(cyclohexyl isocyanate).

When bis(isocyanatomethyl)cyclohexane and/or xylylene diisocyanate and the other polyisocyanate (preferably methylene bis(cyclohexyl isocyanate)) are used in combination, the content ratio thereof is appropriately set depending on the purpose and use.

For example, from the viewpoint of gas barrier properties, the content ratio of bis(isocyanatomethyl)cyclohexane and/or xylylene diisocyanate is, for example, 50% by mass or more, preferably 60% by mass or more, and more preferably 80% by mass or more with respect to the total amount of the polyisocyanate component. The content ratio of bis(isocyanatomethyl)cyclohexane and/or xylylene diisocyanate is, for example, 100% by mass or less, preferably 99% by mass or less, more preferably 95% by mass or less, and even more preferably 90% by mass or less with respect to the total amount of the polyisocyanate component.

Furthermore, from the viewpoint of gas barrier properties, the content ratio of the other polyisocyanate (preferably methylene bis(cyclohexyl isocyanate)) is, for example, 0% by mass or more, preferably 1% by mass or more, more preferably 5% by mass or more, and even more preferably 10% by mass or more with respect to the total amount of the polyisocyanate component. The content ratio of the other polyisocyanate (preferably methylene bis(cyclohexyl isocyanate)) is, for example, 50% by mass or less, preferably 40% by mass or less, and more preferably 20% by mass or less with respect to the total amount of the polyisocyanate component.

The active hydrogen group-containing component is an organic compound containing an active hydrogen group. Examples of the active hydrogen group include a hydroxyl group and an amino group, and preferably a hydroxyl group is used. The active hydrogen group-containing component contains a polyol compound and an active hydrogen group-containing compound containing an anionic group.

The polyol compound is a compound containing two or more hydroxyl groups in a molecule. Furthermore, the polyol compound is a compound except for an active hydrogen group-containing compound containing an anionic group and an active hydrogen group-containing compound containing a nonionic group, which are described below. Examples of the polyol compound include a low molecular weight polyol and a high molecular weight polyol.

The low molecular weight polyol is an organic compound having two or more hydroxyl groups in a molecule and having a relatively low molecular weight. The relatively low molecular weight represents a molecular weight of 50 or more and 650 or less. When the low molecular weight polyol has a molecular weight distribution, the molecular weight represents a number-average molecular weight in terms of polystyrene measured by GPC. Examples of the low molecular weight polyol include a short chain diol having 2 to 6 carbon atoms, a diol having 7 or more carbon atoms, and a trihydric or more low molecular weight polyol.

The short chain diol having 2 to 6 carbon atoms is an organic compound having two hydroxyl groups in one molecule and having 2 to 6 carbon atoms. Examples of the short chain diol include an alkanediol having 2 to 6 carbon atoms, an ether diol having 2 to 6 carbon atoms, and an alkene diol having 2 to 6 carbon atoms. Examples of the alkanediol having 2 to 6 carbon atoms include ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 1,3-cyclohexanediol, and 1,4-cyclohexanediol.

Examples of the ether diol having 2 to 6 carbon atoms include diethylene glycol, triethylene glycol, and dipropylene glycol. Examples of the alkenediol having 2 to 6 carbon atoms include 1,4-dihydroxy-2-butene. These may be used alone or in combination of two or more. From the viewpoint of gas barrier properties, preferably an alkanediol having 2 to 6 carbon atoms is used, and more preferably an ethylene glycol is used.

The content ratio of the short chain diol having 2 to 6 carbon atoms is, for example, 10 parts by mass or more, preferably 30 parts by mass or more, and more preferably 50 parts by mass or more with respect to 100 parts by mass of the total amount of the active hydrogen group-containing component. The content ratio of the short chain diol having 2 to 6 carbon atoms is, for example, 90 parts by mass or less, preferably 80 parts by mass or less, and more preferably 70 parts by mass or less with respect to 100 parts by mass of the total amount of the active hydrogen group-containing component.

The diol having 7 or more carbon atoms is an organic compound having two hydroxyl groups in one molecule and having 7 or more carbon atoms. Examples of the diol having 7 or more carbon atoms include an alkanediol having 7 to 20 carbon atoms, 2,6-dimethyl-1-octene-3,8-diol, 1,3-cyclohexanedimethanol, 1,4-cyclohexanedimethanol, hydrogenated bisphenol A, and bisphenol A. Examples of the diol having 7 or more carbon atoms include polyoxyethylene glycol and polyoxypropylene glycol, each of which has a relatively low molecular weight (molecular weight of 650 or less). These may be used alone or in combination of two or more.

The content ratio of the diol having 7 or more carbon atoms is, for example, 0 parts by mass or more with respect to 100 parts by mass of the total amount of the active hydrogen group-containing component. The content ratio of the diol having 7 or more carbon atoms is, for example, 70 parts by mass or less, preferably 50 parts by mass or less, more preferably 30 parts by mass or less, and even more preferably 10 parts by mass or less with respect to 100 parts by mass of the total amount of the active hydrogen group-containing component.

Examples of the trihydric or more low molecular weight polyol include a trihydric alcohol, a tetrahydric alcohol, a pentahydric alcohol, a hexahydric alcohol, a heptahydric alcohol, and an octahydric alcohol. As the trihydric or more low molecular weight polyol, preferably, a trihydric alcohol and a tetrahydric alcohol are used. Examples of the trihydric alcohol include glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include, for example, tetramethylol methane (pentaerythritol) and diglycerin. These may be used alone or in combination of two or more. As the trihydric or more low molecular weight polyol, preferably a trihydric alcohol is used, and more preferably trimethylolpropane is used.

The content ratio of the trihydric or more low molecular weight polyol is, for example, 0 parts by mass or more, preferably 1 part by mass or more, and more preferably 2 parts by mass or more with respect to 100 parts by mass of the total amount of the active hydrogen group-containing component. The content ratio of the trihydric or more low molecular weight polyol is, for example, 20 parts by mass or less, preferably 10 parts by mass or less, and more preferably 8 parts by mass or less with respect to 100 parts by mass of the total amount of the active hydrogen group-containing component.

The high molecular weight polyol is an organic compound (polymer) having two or more hydroxyl groups in a molecule and having a relatively high molecular weight. The number-average molecular weight of the high molecular weight polyol is, for example, more than 650, for example, 20000 or less. The number-average molecular weight represents the number-average molecular weight in terms of polystyrene measured by GPC. Examples of the high molecular weight polyol include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These may be used alone or in combination of two or more. In view of gas barrier properties, preferably the active hydrogen group-containing component does not contain a high molecular weight polyol.

From the viewpoint of gas barrier properties, as the polyol compound, preferably a low molecular weight polyol is used, and more preferably a short chain diol having 2 to 6 carbon atoms is used. That is, from the viewpoint of gas barrier properties, the polyol compound preferably contains a low molecular weight polyol, and more preferably contains a short chain diol having 2 to 6 carbon atoms. From the viewpoint of gas barrier properties, the polyol compound even more preferably contains a short chain diol having 2 to 6 carbon atoms and a trihydric or more low molecular weight polyol, and even more preferably contains a short chain diol having 2 to 6 carbon atoms and a trihydric alcohol. From the viewpoint of gas barrier properties, the polyol compound even more preferably does not contain a high molecular weight polyol (a high molecular weight polyol having a number-average molecular weight of more than 650), and consists of a low molecular weight polyol, and particularly preferably consists of a short chain diol having 2 to 6 carbon atoms and a trihydric alcohol.

When the polyol compound contains a short chain diol having 2 to 6 carbon atoms and a trihydric or more low molecular weight polyol, the content ratio thereof is appropriately set depending on the purpose and use. For example, the content ratio of the short chain diol having 2 to 6 carbon atoms is, for example, 80 parts by mass or more, preferably 85 parts by mass or more, and more preferably 90 parts by mass or more with respect to 100 parts by mass of the total amount of the short chain diol having 2 to 6 carbon atoms and the trihydric or more low molecular weight polyol. Furthermore, the content ratio of the short chain diol having 2 to 6 carbon atoms is, for example, 98 parts by mass or less, preferably 95 parts by mass or less with respect to 100 parts by mass of the total amount of the short chain diol having 2 to 6 carbon atoms and the trihydric or more low molecular weight polyol. Furthermore, the content ratio of the trihydric or more low molecular weight polyol is, for example, 2 parts by mass or more, preferably 5 parts by mass or more with respect to 100 parts by mass of the total amount of the short chain diol having 2 to 6 carbon atoms and the trihydric or more low molecular weight polyol. Furthermore, the content ratio of the trihydric or more low molecular weight polyol is, for example, 20 parts by mass or less, preferably 15 parts by mass or less, and more preferably 10 parts by mass or less with respect to 100 parts by mass of the total amount of the short chain diol having 2 to 6 carbon atoms and the trihydric or more low molecular weight polyol.

The active hydrogen group-containing compound containing an anionic group is an organic compound having both an anionic group and an active hydrogen group in one molecule. Examples of the anionic group include a carboxy group (carboxylic acid group) and a sulfo group (sulfonic acid group), and from the viewpoint of water dispersibility, a carboxy group is preferably used. Examples of the active hydrogen group include a hydroxyl group and an amino group, and preferably a hydroxyl group is used.

As the active hydrogen group-containing compound containing an anionic group, preferably an organic compound having one carboxy group and two or more hydroxyl groups in one molecule is used, more preferably an organic compound having both one carboxy group and two hydroxyl groups in one molecule is used. Examples of the organic compound having both one carboxy group and two hydroxyl groups in one molecule include a carboxy group-containing diol. Examples of the carboxy group-containing diol include dihydroxy alkanoic acid. Examples of the dihydroxy alkanoic acid include 2,2-dimethylol acetic acid, 2,2-dimethylol lactic acid, 2,2-dimethylol propionic acid (also known as: dimethylol propionic acid), 2,2-dimethylol butanoic acid, 2,2-dimethylol butyric acid, and 2,2-dimethylol valeric acid. These may be used alone or in combination of two or more. From the viewpoint of water dispersibility, preferably 2,2-dimethylol propionic acid is used.

The content ratio of the active hydrogen group-containing compound containing an anionic group is, for example, 10 parts by mass or more, preferably 20 parts by mass or more with respect to 100 parts by mass of the total amount of the active hydrogen group-containing component. The blending ratio of the active hydrogen group-containing compound containing an anionic group is, for example, 50 parts by mass or less, preferably 40 parts by mass or less with respect to 100 parts by mass of the total amount of the active hydrogen group-containing component.

The active hydrogen group-containing component may further contain an active hydrogen group-containing compound containing a nonionic group in addition to the above-described polyol compound and the above-described active hydrogen group-containing compound containing an anionic group, as necessary.

The nonionic group is a one end-capped polyoxyethylene group, and more specifically, an alkoxy-capped-one-end polyoxyethylene group. That is, the nonionic group is defined as a polyoxyethylene group having one end capped with an alkoxy group (for example, an alkoxy group having 1 to 4 carbon atoms). The polyoxyethylene group (i.e., polyoxyethylene glycol) of which one end is not capped and which has a hydroxyl group at both ends thereof is the above-described polyol compound, and is not included in active hydrogen group-containing compounds containing a nonionic group.

More specifically, examples of the active hydrogen group-containing compound containing a nonionic group include one-end-capped (alkoxy-capped-one-end) polyoxyethylene glycol and a nonionic side chain-containing polyol, and preferably a nonionic side chain-containing polyol is used. Examples of the nonionic side chain-containing polyol include a nonionic side chain-containing diol. Examples of the nonionic side chain-containing diol include an alkoxy-capped-one-end polyoxyethylene side chain-containing polyol. The active hydrogen group containing-compound containing a nonionic group is prepared by a known method. The active hydrogen group-containing compounds containing a nonionic group can be used alone or in combination of two or more. The content ratio of the active hydrogen group-containing compound containing a nonionic group is appropriately set depending on the purpose and use.

The active hydrogen group-containing component preferably consists of the above-described polyol compound and the above-described active hydrogen group-containing compound containing the anionic group. More specifically, the active hydrogen group-containing component preferably consists of a short chain diol having 2 to 6 carbon atoms and an active hydrogen group-containing compound containing an anionic group, or consists of a short chain diol having 2 to 6 carbon atoms, an active hydrogen group-containing compound containing an anionic group, and a trihydric or more low molecular weight polyol. The active hydrogen group-containing component more preferably consists of a short chain diol having 2 to 6 carbon atoms, an active hydrogen group-containing compound containing an anionic group, and a trihydric or more low molecular weight polyol.

The method of synthesizing the isocyanate group-terminated prepolymer is not particularly limited. For example, the above-described components are blended in a predetermined equivalent ratio and allowed to react.

More specifically, the equivalent ratio (isocyanate group/active hydrogen group) of the isocyanate group in the polyisocyanate component with respect to the active hydrogen group (hydroxyl group and amino group) in the active hydrogen group-containing component is, for example, more than 1, preferably 1.1 more. The equivalent ratio (isocyanate group/active hydrogen group) of the isocyanate group in the polyisocyanate component with respect to the active hydrogen group (hydroxyl group and amino group) in the active hydrogen group-containing component is, for example, 20 or less, preferably 10 or less.

In the synthesis of the isocyanate group-terminated prepolymer, a known polymerization method is employed. Examples of the polymerization method include bulk polymerization and solution polymerization. From the viewpoint of adjusting the reactivity, solution polymerization is preferably employed as the polymerization method. In the bulk polymerization, for example, the above-described components are blended and allowed to react under a nitrogen atmosphere. The reaction temperature is, for example, 75 to 85°C. The reaction time is, for example, 1 to 20 hours. In solution polymerization, for example, the above-described components are blended and allowed to react in an organic solvent under a nitrogen atmosphere. The reaction temperature is, for example, 20 to 80°C. The reaction time is, for example, 1 to 20 hours. Examples of the organic solvent include a solvent that is inert to isocyanate groups. Examples of the organic solvent include acetone, methyl ethyl ketone, ethyl acetate, tetrahydrofuran, and acetonitrile. These may be used alone or in combination of two or more. In the above-described polymerization, a catalyst may be added as necessary. Examples of the catalyst include an amine-based catalyst and an organometallic catalyst. These may be used alone or in combination of two or more. The addition amount of the catalyst is appropriately set depending on the purpose and use.

In the synthesis of the isocyanate group-terminated prepolymer, the above-described polymerization is continued until the isocyanate group concentration of the reaction solution reaches the isocyanate group concentration of the isocyanate group-terminated prepolymer described below. Thereafter, as necessary, an unreacted polyisocyanate component is removed from the reaction product solution by a known removal method. Examples of the removal method include distillation and extraction. In this manner, an isocyanate group-terminated prepolymer is obtained.

The isocyanate group concentration of the isocyanate group-terminated prepolymer is, for example, 4% by mass or more, preferably 5% by mass or more, and more preferably 6% by mass or more. The isocyanate group concentration of the isocyanate group-terminated prepolymer is, for example, 25% by mass or less, preferably 20% by mass or less, more preferably 17% by mass or less, and even more preferably 15% by mass or less.

The average number of isocyanate groups in the isocyanate group-terminated prepolymer is, for example, 1.5 or more, preferably 1.9 or more, and more preferably 2.0 or more. The average number of isocyanate groups in the isocyanate group-terminated prepolymer is, for example, 3.0 or less, preferably 2.5 or less.

[ii] Neutralization Step

The above-described isocyanate group-terminated prepolymer has the anionic group derived from an active hydrogen compound containing an anionic group. Therefore, in this method, after the prepolymer synthesis step, the anionic group of the isocyanate group-terminated prepolymer is neutralized by a neutralizing agent (neutralization step).

In the following, the neutralizing agent used in the neutralizing step may be referred to as a primary neutralizing agent. Further, the neutralizing agent used in the substitution step described below may be referred to as a secondary neutralizing agent. The primary neutralizing agent and the secondary neutralizing agent may be collectively referred to as a neutralizing agent.

The primary neutralizing agent contains a monoamine compound having a tertiary amino group, and preferably consists of a monoamine compound having a tertiary amino group. Hereinafter, the monoamine compound having a tertiary amino group is referred to as a tertiary monoamine.

Examples of the tertiary monoamine include a trialkylamine and an alkanolamine. Examples of the trialkylamine include a trialkylamine having 1 to 4 carbon atoms. Examples of the trialkylamine having 1 to 4 carbon atoms include trimethylamine (TMA) and triethylamine (TEA). Examples of the alkanolamine include dimethylethanolamine, methyldiethanolamine, triethanolamine, and triisopropanolamine. These may be used alone or in combination of two or more.

From the viewpoint of storage stability, as the tertiary monoamine, preferably a trialkylamine is used, more preferably a trialkylamine having 1 to 4 carbon atoms is used, even more preferably trimethylamine (TMA) and triethylamine (TEA) are used, and particularly preferably triethylamine (TEA) is used.

The primary neutralizing agent can be used as a primary neutralizing agent solution. The primary neutralizing agent solution is prepared, for example, by dissolving the primary neutralizing agent in the above-described organic solvent. The solid content concentration of the primary neutralizing agent solution is appropriately set depending on the purpose and use.

The addition amount of the primary neutralizing agent (tertiary monoamine) is, for example, 0.4 equivalents or more, preferably 0.6 equivalents or more with respect to one equivalent of the anionic group. The addition amount of the primary neutralizing agent (tertiary monoamine) is, for example, 1.2 equivalents or less, preferably 1.0 equivalents or less with respect to one equivalent of the anionic group.

The addition of the primary neutralizing agent (tertiary monoamine) neutralizes the anionic group of the isocyanate group-terminated prepolymer. In this manner, a salt (tertiary amine salt) of an anionic group is formed.

[iii] Chain Extension Step

Next, in this method, after the neutralization step, the isocyanate group-terminated prepolymer (primary reaction product) is allowed to react with a chain extender to obtain an extended-type polyurethane resin (secondary reaction product). For example, an extended-type polyurethane resin is obtained by the chain extension reaction of the isocyanate group-terminated prepolymer and a chain extender in water (chain extension step).

The chain extender is an organic compound that causes a chain extension reaction of the isocyanate group-terminated prepolymer. The chain extender is, for example, an organic compound having two or more active hydrogen groups (hydroxyl group and/or amino group) in a molecule, and is preferably an organic compound having two or more amino groups in a molecule, or an organic compound having one or more hydroxyl groups and one or more amino groups in a molecule.

Examples of the chain extender include a polyamine and an amino alcohol. Examples of the polyamine include an aromatic polyamine, an araliphatic polyamine, an alicyclic polyamine, an aliphatic polyamine, and a polyoxyethylene group-containing polyamine. Examples of the aromatic polyamine include, for example, 4,4'-diphenylmethanediamine and tolylenediamine. Examples of the araliphatic polyamine include 1,3-xylylenediamine and 1,4-xylylenediamine. Examples of the alicyclic polyamine include 3-aminomethyl-3,5,5-trimethylcyclohexylamine (also known as: isophoronediamine), 4,4'-dicyclohexylmethanediamine, 2,5-bis(aminomethyl)bicyclo[2.2.1]heptane, 2,6-bis(aminomethyl)bicyclo[2.2.1]heptane, 1,4-cyclohexanediamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5,5]undecane, 1,3-bis(aminomethyl)cyclohexane, and 1,4-bis(aminomethyl)cyclohexane. Examples of the aliphatic polyamine include ethylenediamine, propylenediamine, 1,3-propanediamine, 1,4-butanediamine, 1,5-pentanediamine, 1,6-hexamethylenediamine, hydrazine, hydrazine hydrate, diethylenetriamine, triethylenetetramine, tetraethylenepentamine, 1,2-diaminoethane, 1,2-diaminopropane, and 1,3-diaminopentane. Examples of the polyoxyethylene group-containing polyamine include polyoxyalkylene ether diamine. Examples of the polyoxyalkylene ether diamine include polyoxyethylene ether diamine. Examples of the amino alcohol include 2-(2-aminoethylamino)ethanol and 2-(2-aminoethylamino)-1-methylpropanol.

Examples of the chain extender include an amino group-containing alkoxysilyl compound. Examples of the amino group-containing alkoxysilyl compound include an alkoxysilyl compound having a primary amino group. Examples of the alkoxysilyl compound having a primary amino group include γ-aminopropyltrimethoxysilane, γ-aminopropyltriethoxysilane, and N-phenyl-γ-aminopropyltrimethoxysilane. Furthermore, examples of the amino group-containing alkoxysilyl compound include an alkoxysilyl compound having a primary amino group and a secondary amino group. Examples of the alkoxysilyl compound having a primary amino group and a secondary amino group include N-β(aminoethyl)γ-aminopropyltrimethoxysilane (also known as; N-2-(aminoethyl)-3-aminopropyltrimethoxysilane), N-β(aminoethyl)γ-aminopropyltriethoxysilane, N-β(aminoethyl)γ-aminopropylmethyldimethoxysilane, and N-β(aminoethyl)γ-aminopropylmethyldiethoxysilane.

These chain extenders may be used alone or in combination of two or more. As the chain extender, preferably an aliphatic polyamine and an amino alcohol are used, more preferably ethylenediamine and 2-(2-aminoethylamino)ethanol are used.

The chain extender can be used as a chain extender solution. The chain extender solution is prepared, for example, by dissolving a chain extender in water. The solid content concentration of the chain extender solution is appropriately set depending on the purpose and use.

The method of reacting the isocyanate group-terminated prepolymer with the chain extender in water is not particularly limited. For example, first, the isocyanate group-terminated prepolymer is dispersed in water. Next, a chain extender is added to the water in which the isocyanate group-terminated prepolymer is dispersed to chain extend the isocyanate group-terminated prepolymer in water. The method of dispersing the isocyanate group-terminated prepolymer in water is not particularly limited. For example, the isocyanate group-terminated prepolymer is added to water while the water is being stirred. In this case, the amount of water is 100 to 1000 parts by mass with respect to 100 parts by mass of the isocyanate group-terminated prepolymer. Thereafter, a chain extender is added dropwise to the water in which the isocyanate group-terminated prepolymer is water-dispersed, while the water is being stirred. In this case, the equivalent ratio (active hydrogen groups/isocyanate groups) of the active hydrogen group of the chain extender with respect to the isocyanate group of the isocyanate group-terminated prepolymer is, for example, from 0.8 to 1.2. The chain extension reaction is completed, for example, at room temperature. The time to the completion of the reaction is, for example, 0.1 to 10 hours. Furthermore, in this method, after the completion of the reaction, the organic solvent and/or water can be removed to adjust the solid content concentration. Furthermore, in this method, after the completion of the reaction, water can be added to adjust the solid content concentration.

As a result of the above-described chain extension reaction, an aqueous dispersion of an extended-type polyurethane resin (hereinafter, referred to as a primary polyurethane dispersion or a primary PUD) is obtained. The primary polyurethane dispersion (primary PUD) contains an extended-type polyurethane resin in which the anionic group is neutralized by the above-described primary neutralizing agent and is not neutralized by the secondary neutralizing agent described below.

[iv] Substitution Step

Next, in this method, at least a part of the above-described primary neutralizing agent is substituted with the secondary neutralizing agent after the above-described chain extension step (substitution step).

The secondary neutralizing agent contains a monoamine compound having a primary amino group or a secondary amino group, and preferably consists of a monoamine compound having a primary amino group or a secondary amino group. Hereinafter, a monoamine compound having a primary amino group or a secondary amino group is referred to as a "primary to secondary monoamine".

Examples of the primary to secondary monoamine include, for example, a primary monoamine and a secondary monoamine. Examples of the primary monoamine include an aliphatic primary monoamine, an alicyclic primary monoamine, an aromatic primary monoamine, an araliphatic primary monoamine, and a primary monoaminosilane. Examples of the aliphatic primary monoamine include, for example, methylamine, 1-ethylamine, 1-propylamine, isopropylamine, 1-butylamine, isobutylamine, s-butylamine, t-butylamine, hexylamine, and octylamine. Examples of the alicyclic primary monoamine include cyclohexylamine. Examples of the aromatic primary monoamine include aniline (phenylamine).

Examples of the araliphatic primary monoamine include benzylamine. Examples of the primary monoaminosilane include 3-aminopropyltriethoxysilane. Examples of the secondary monoamine include an aliphatic secondary monoamine. Examples of the aliphatic secondary monoamine include dialkylamine. Examples of the dialkylamine include dimethylamine, diethylamine, methylethylamine, dipropylamine, diisopropylamine, dibutylamine, and diisobutylamine. These may be used alone or in combination of two or more. As the primary to secondary monoamine, preferably a primary monoamine is used.

From the viewpoint of storage stability, as the primary to secondary monoamine, preferably a monoamine compound in which the total number of the carbon atoms of the hydrocarbon group bonded to the primary amino group or the secondary amino group is 2 to 6. More specifically, examples of such a monoamine compound include a primary monoamine having 2 to 6 carbon atoms and a secondary amine compound having 2 to 6 carbon atoms. Examples of the primary monoamine having 2 to 6 carbon atoms include 1-ethylamine (having 2 carbon atoms), 1-propylamine (having 3 carbon atoms), isopropylamine (having 3 carbon atoms), 1-butylamine (having 4 carbon atoms), isobutylamine (having 4 carbon atoms), s-butylamine (having 4 carbon atoms), t-butylamine (having 4 carbon atoms), 1-hexylamine (having 6 carbon atoms), cyclohexylamine (having 6 carbon atoms), aniline (having 6 carbon atoms), and 3-aminopropyltriethoxysilane (having 3 carbon atoms). Examples of the secondary amine compound having 2 to 6 carbon atoms include dimethylamine (having 2 carbon atoms), diethylamine (having 4 carbon atoms), methylethylamine (having 3 carbon atoms), and dipropylamine (having 6 carbon atoms).

From the viewpoint of storage stability, as the primary to secondary monoamine, more preferably, a monoamine compound in which the total number of the carbon atoms of the hydrocarbon group bonded to the primary amino group or the secondary amino group is 2 to 4. More specifically, examples of such a monoamine compound include a primary monoamine having 2 to 4 carbon atoms and a secondary amine compound having 2 to 4 carbon atoms. Example of the primary monoamine having 2 to 4 carbon atoms include 1-ethylamine (having 2 carbon atoms), 1-propylamine (having 3 carbon atoms), isopropylamine (having 3 carbon atoms), 1-butylamine (having 4 carbon atoms), isobutylamine (having 4 carbon atoms), s-butylamine (having 4 carbon atoms), t-butylamine (having 4 carbon atoms), and 3-aminopropyltriethoxylane (having 3 carbon atoms). Examples of the secondary amine compound having 2 to 4 carbon atoms include dimethylamine (having 2 carbon atoms), diethylamine (having 4 carbon atoms), and methylethylamine (having 3 carbon atoms).

From the viewpoint of storage stability, as the primary to secondary monoamine, more preferably 1-propylamine (having 3 carbon atoms) and 1-butylamine (having 4 carbon atoms) are used, and particularly preferably 1-propylamine (having 3 carbon atoms) is used.

The secondary neutralizing agent can be used as a secondary neutralizing agent solution. The secondary neutralizing agent solution is prepared, for example, by dissolving the secondary neutralizing agent in the above-described organic solvent. The solid content concentration of the secondary neutralizing agent solution is appropriately set depending on the purpose and use.

In a method of substituting the above-described primary neutralizing agent with a secondary neutralizing agent, for example, a secondary neutralizing agent is added to the primary polyurethane dispersion (primary PUD) and retained at a predetermined temperature for a predetermined length of time.

From the viewpoint of storage stability, for example, the addition amount of the secondary neutralizing agent (primary to secondary monoamine) with respect to 1 mol of the primary neutralizing agent (tertiary monoamine) is, for example, 0.5 mol or more, preferably 0.7 mol or more, and more preferably 0.9 mol or more. The addition amount of the secondary neutralizing agent (primary to secondary monoamine) with respect to 1 mol of the primary neutralizing agent (tertiary monoamine) is, for example, 3.0 mol or less, preferably 2.0 mol or less, and more preferably 1.2 mol or less.

The retention environment is in the atmosphere. The retention temperature is, for example, 5°C or more, preferably 40°C or more. The retention temperature is, for example, 80°C or less, preferably 60°C or less. The retention time is, for example, 20 minutes or more, preferably 30 minutes or more. The retention time is, for example, 24 hours or less, preferably 12 hours or less.

In this manner, at least a part of the primary neutralizing agent (tertiary monoamine) is substituted with the secondary neutralizing agent (primary to secondary monoamine).

The number of times of addition and retention (substitution) of the secondary neutralizing agent is not particularly limited, and may be once or several times. From the viewpoint of production efficiency, the number of times of addition and retention (substitution) of the secondary neutralizing agent is preferably once.

Furthermore, in this method, after the substitution, the organic solvent and/or water can be removed to adjust the solid content concentration. Furthermore, in this method, after the substitution, water can be added to adjust the solid content concentration.

As described above, an aqueous dispersion of an extended-type polyurethane resin (hereinafter, a secondary polyurethane dispersion, secondary PUD) can be obtained. The secondary polyurethane dispersion (secondary PUD) contains an extended-type polyurethane resin in which the anionic group is neutralized by the above-described primary to secondary monoamine (secondary neutralizing agent).

(1-2) Capped-type Polyurethane Resin

[i] Prepolymer Synthesis Step

To obtain a capped-type polyurethane resin, first, a polyisocyanate component and an active hydrogen group-containing component are allowed to react to synthesize an isocyanate group-terminated prepolymer (prepolymer synthesis step).

Examples of the polyisocyanate component include the polyisocyanate components described above as a raw material of the extended-type polyurethane resin. Examples of the active hydrogen group-containing component include the active hydrogen group-containing components described above as a raw material of the extended-type polyurethane resin.

In the prepolymer synthetic step in the production of the capped-type polyurethane resin, for example, the polyisocyanate component and the active hydrogen group-containing component are allowed to react in the same manner as the above-described prepolymer synthesis step in the production of the extended-type polyurethane resin. In this manner, an isocyanate group-terminated prepolymer is obtained.

[ii] Neutralization Step

The above-described isocyanate group-terminated prepolymer has an anionic group derived from an active hydrogen compound containing an anionic group. Therefore, in this method, after the prepolymer synthesis step, the anionic group of the isocyanate group-terminated prepolymer is neutralized by a neutralizing agent (neutralization step).

In the neutralization step in the production of the capped-type polyurethane resin, for example, the anionic group of the isocyanate group-terminated prepolymer is neutralized by a primary neutralizing agent in the same manner as the neutralization step in the production of the above-described extended-type polyurethane resin. In this manner, a salt (tertiary amine salt) of the anionic group is formed.

[iii] Capping and Substitution Step

Next, in this method, after the neutralization step, the isocyanate group-terminated prepolymer (primary reaction product) is allowed to react with an end-capping agent to obtain a capped-type polyurethane resin (secondary reaction product). For example, a capped-type polyurethane resin is obtained by the end-capping reaction of the isocyanate group-terminated prepolymer with an end-capping agent in water. In this step, at least a part of the primary neutralizing agent is substituted with the end-capping agent (capping/substitution step).

The end-capping agent is an organic compound that caps the isocyanate group at the molecular end of the isocyanate group-terminated prepolymer. The end-capping agent is, for example, an organic compound having one active hydrogen group (hydroxyl group and/or amino group) in a molecule, and is preferably an organic compound having one or more amino group(s) in a molecule.

Examples of the end-capping agent include, for example, a monoamine. Examples of the monoamine include the above-described primary to secondary monoamines. The end-capping agent preferably consists of the above-mentioned primary to secondary monoamines.

From the viewpoint of storage stability, as the primary to secondary monoamine, preferably a primary monoamine is used. From the viewpoint of storage stability, as the primary to secondary monoamine, preferably a monoamine compound in which the total number of the carbon atoms of the hydrocarbon group bonded to the primary amino group or the secondary amino group is 2 to 6 is used, and more preferably a monoamine compound in which the total number of the carbon atoms of the hydrocarbon group bonded to the primary amino group or the secondary amino group is 2 to 4 is used.

From the viewpoint of storage stability, as the primary to secondary monoamine, even more preferably 1-propylamine (having 3 carbon atoms) and 1-butylamine (having 4 carbon atoms) are used, and particularly preferably 1-propylamine (having 3 carbon atoms) is used.

The end-capping agent can be used as an end-capping agent solution. The end-capping agent solution is prepared, for example, by dissolving an end-capping agent in the above-described organic solvent. The solid content concentration of the end-capping agent solution is appropriately set depending on the purpose and use.

**In** the method of capping the isocyanate group at the molecular end of the isocyanate group-terminated prepolymer with an end-capping agent and substituting the above-described primary neutralizing agent with the end-capping agent, for example, an end-capping agent is added to the isocyanate group-terminated prepolymer and retained at a predetermined temperature for a predetermined length of time.

From the viewpoint of storage stability, for example, the equivalent ratio (active hydrogen group/isocyanate group) of the active hydrogen group of the end-capping agent with respect to the isocyanate group of the isocyanate group-terminated prepolymer is, for example, 1.01 or more and 5.0 or less.

The retention environment is in the atmosphere. The retention temperature is, for example, 5°C or more, preferably 40°C or more. The retention temperature is, for example, 80°C or less, preferably 60°C or less. The retention time is, for example, 20 minutes or more, preferably 30 minutes or more. The retention time is, for example, 24 hours or less, preferably 12 hours or less.

In this manner, the isocyanate group at the molecular end of the isocyanate group-terminated prepolymer is capped with the end-capping agent (primary to secondary monoamine), and at least a part of the primary neutralizing agent (tertiary monoamine) is substituted with the end-capping agent (primary to secondary monoamine). In this manner, a capped-type polyurethane resin is obtained.

The number of times of addition and retention (substitution) of an end-capping agent is not particularly limited, and may be once or several times. From the viewpoint of production efficiency, the number of times of addition and retention (substitution) of the end-capping agent is preferably once.

Furthermore, in this method, after the substitution, the organic solvent and/or water can be removed to adjust the solid content concentration. Furthermore, in this method, after the substitution, water can be added to adjust the solid content concentration.

As described above, an aqueous dispersion of the capped-type polyurethane resin (polyurethane dispersion, PUD) is obtained.

(1-3) Extended·capped Composite Polyurethane Resin

In the above description, in the preparation of the polyurethane resin, the isocyanate group-terminated prepolymer is neutralized by the primary neutralizing agent, and then the isocyanate group at the molecular end is allowed to react with a chain extender to substitute the primary neutralizing agent with a secondary neutralizing agent, or the isocyanate group-terminated prepolymer is neutralized by the primary neutralizing agent, and then the isocyanate group at the molecular end is capped with an end-capping agent, and the primary neutralizing agent is substituted with the end-capping agent.

On the other hand, in the production of the polyurethane resin, for example, the isocyanate group-terminated prepolymer may be neutralized by a primary neutralizing agent, and then a part of the isocyanate group at the molecular end may be allowed to react with a chain extender, and the remainder of the isocyanate group at the molecular end is capped with an end-capping agent, and the primary neutralizing agent may be substituted with a secondary neutralizing agent and the end-capping agent. According to such a method, an extended·capped composite polyurethane resin is obtained.

These polyurethane resins may be used alone or in combination of two or more. As the polyurethane resin, preferably an extended-type polyurethane resin and a capped-type polyurethane resin are used, and more preferably an extended-type polyurethane resin is used.

(1-4) Polyurethane Resin

The polyurethane resins (extended-type polyurethane resin, capped-type polyurethane resin, and extended·-capped composite polyurethane resin) contain a primary to secondary monoamine (secondary neutralizing agent or end-capping agent) as a neutralizing agent.

More specifically, the polyurethane resin has an anionic group as described above. The anionic group is neutralized by a neutralizing agent. The neutralizing agent then contains a primary to secondary monoamine (secondary neutralizing agent or end-capping agent).

The neutralizing agent may contain only a primary to secondary monoamine (secondary neutralizing agent or end-capping agent) or may contain a tertiary monoamine (primary neutralizing agent) and a primary to secondary monoamine (secondary neutralizing agent or end-capping agent). The neutralizing agent preferably contains a tertiary monoamine (primary neutralizing agent) and a primary to secondary monoamine (secondary neutralizing agent or end-capping agent).

The ratios of the tertiary monoamine (primary neutralizing agent) and the primary to secondary monoamine (secondary neutralizing agent or end-capping agent) in the neutralizing agent are not particularly limited. Preferably, from the viewpoint of storage stability, the content ratio of the primary to secondary monoamine (secondary neutralizing agent or end-capping agent) is adjusted.

For example, from the viewpoint of storage stability, the content ratio of the tertiary monoamine (primary neutralizing agent) with respect to the total amount of the neutralizing agent (that is, the total moles of the tertiary monoamine (primary neutralizing agent) and the primary to secondary monoamine (secondary neutralizing agent or end-capping agent)) is, for example, 0 mol % or more, preferably 1 mol% or more, more preferably 5 mol % or more, even more preferably 8 mol % or more, and particularly preferably 10 mol % or more.

From the viewpoint of storage stability, the content ratio of the tertiary monoamine (primary neutralizing agent) with respect to the total amount of the neutralizing agent (that is, the total moles of the tertiary monoamine (primary neutralizing agent) and the primary to secondary monoamine (secondary neutralizing agent or end-capping agent)) is, for example, 80 mol % or less, preferably 75 mol % or less, more preferably 70 mol % or less, even more preferably 50 mol % or less, even more preferably 30 mol % or less, and particularly preferably 20 mol % or less.

Furthermore, from the viewpoint of storage stability, the content ratio of the primary to secondary monoamine (secondary neutralizing agent) with respect to the total amount of the neutralizing agent (that is, the total moles of the tertiary monoamine (primary neutralizing agent) and the primary to secondary monoamine (secondary neutralizing agent or end-capping agent)) is, for example, 20 mol % or more, preferably 25 mol % or more, more preferably 30 mol % or more, even more preferably 50 mol % or more, even more preferably 70 mol % or more, and particularly preferably 80 mol % or more.

Furthermore, from the viewpoint of storage stability, the content ratio of the primary to secondary monoamine (secondary neutralizing agent) with respect to the total amount of the neutralizing agent (that is, the total moles of the tertiary monoamine (primary neutralizing agent) and the primary to secondary monoamine (secondary neutralizing agent or end-capping agent)) is, for example, 100 mol % or less, preferably 99 mol % or less, more preferably 95 mol % or less, even more preferably 92 mol % or less, and particularly preferably 90 mol % or less.

The content ratio of the primary to secondary monoamine (secondary neutralizing agent) with respect to the total amount of the neutralizing agent (that is, the total moles of the tertiary monoamine (primary neutralizing agent) and the primary to secondary monoamine (secondary neutralizing agent or end-capping agent)) can be measured in conformity with Examples described below.

The number-average molecular weight of the polyurethane resin is, for example, 500 or more. The number-average molecular weight of the polyurethane resin is usually 3000000 or less.

From the viewpoint of water resistance, the polyurethane resin preferably has a relatively high number-average molecular weight. More specifically, the number-average molecular weight of the polyurethane resin is preferably 700 or more, preferably 1000 or more, more preferably 5000 or more, even more preferably 10000 or more, and particularly preferably 100000 or more.

**In** other words, from the viewpoint of water resistance, as the polyurethane resin, preferably an extended-type polyurethane resin is used. The extended-type polyurethane resin has a relatively high number-average molecular weight. The number-average molecular weight of the extended-type polyurethane resin falls within the above-described range. Therefore, according to the extended-type polyurethane resin, excellent water resistance is achieved.

The urethane group·urea group concentration of the polyurethane resin is, for example, 0.1% by mass or more. Furthermore, the urethane group·urea group concentration of the polyurethane resin is usually 60% by mass or less.

From the viewpoint of gas barrier properties, the urethane group·urea group concentration of the polyurethane resin is relatively high. For example, when the polyol compound contains a short chain diol having 2 to 6 carbon atoms and does not contain a high molecular weight polyol, the urethane group·urea group concentration of the polyurethane resin is relatively high.

More specifically, the urethane group·urea group concentration of the polyurethane resin is preferably 30% by mass or more, more preferably 32% by mass or more, and even more preferably 33% by mass or more. The urethane group·urea group concentration of the polyurethane resin is preferably 50% by mass or less, more preferably 45% by mass or less, and even more preferably 42% by mass or less. The urethane group·urea group concentration of the polyurethane resin can be calculated from the charge ratio of the raw material components.

(2) Polyurethane Dispersion

As described above, the polyurethane resin (extended-type polyurethane resin, capped-type polyurethane resin, and extended·capped composite polyurethane resin) is obtained as a polyurethane dispersion.

The solid content concentration of the polyurethane dispersion is adjusted by an appropriate method. Water can be removed from the polyurethane dispersion by a known method to adjust the solid content concentration of the polyurethane dispersion. Furthermore, in this method, water can be added to the polyurethane dispersion to adjust the solid content concentration. To adjust the solid content concentration, an aqueous solvent (for example, 2-propanol) can be added to the polyurethane dispersion.

The solid content concentration of the polyurethane dispersion is, for example, 10% by mass or more, preferably 15% by mass or more, and more preferably 20% by mass or more. The solid content concentration of the polyurethane dispersion is, for example, 60% by mass or less, preferably 50% by mass or less, and more preferably 40% by mass or less.

Furthermore, from the viewpoint of storage stability, preferably the carbonate ion concentration of the polyurethane dispersion is relatively low. For example, the carbonate ion concentration with respect to the total amount of the polyurethane dispersion is, for example, 1000 ppm or less, 700 ppm or less, more preferably 500 ppm or less, even more preferably 400 ppm or less, and particularly preferably 300 ppm or less. Furthermore, with respect to the total amount of the polyurethane dispersion, the carbonate ion concentration is usually 10 ppm or more. The carbonate ion concentration can be measured by quantitative analysis using an electrophoresis system in conformity with Examples described below.

When the carbonate ion concentration falls within the above range, desorption of the neutralizing agent by the carbonate ion can be suppressed, and formation of a free anionic group and aggregation of the polyurethane resin can be suppressed. As a result, the storage stability can be improved.

The carbonate ion concentration is adjusted by a known method. Preferably, the organic solvent or water is removed (desolubilized) by vacuum purging, and then the carbon dioxide and the carbonate ion are removed (decarboxylated) by continuing the vacuum purging.

As the conditions for the vacuum purging, the pressure condition is, for example, 1 kPa or more, preferably 2 kPa or more, and for example, 50 kPa or less, preferably 40 kPa or less. The time for the vacuum purging is, for example, 0.5 hours or more, preferably 1.0 hours or more, more preferably 1.5 hours or more, even more preferably 2.0 hours or more, and particularly preferably 3.0 hours or more. In this manner, the carbonate ion concentration of the polyurethane dispersion can be adjusted.

The pH of the polyurethane dispersion is, for example, 5 or more, preferably 6 or more. The pH of the polyurethane dispersion is, for example, 11 or less, preferably 10 or less.

The average particle diameter of the polyurethane dispersion is, for example, 10 nm or more, preferably 20 nm or more, and more preferably 50 nm or more. The average particle diameter of the polyurethane dispersion is, for example, 500 nm or less, preferably 300 nm or less, more preferably 200 nm or less, and even more preferably 100 nm or less.

The polyurethane dispersion may contain various additives, as necessary. Examples of the additive include a filler (for example, a layered inorganic compound), a dispersant, a silane coupling agent, an alkoxysilane compound, an antioxidant, a heat stabilizer, an ultraviolet absorber, a plasticizer, an antistatic agent, a lubricant, an anti-blocking agent, a surfactant, a dispersion stabilizer, a pigment, a dye, and a crystal nucleating agent. These may be used alone or in combination of two or more. The addition amount of the additive and the timing of the addition are appropriately set according to the type of the additive.

Furthermore, the polyurethane dispersion may further contain a curing agent. Examples of the curing agent include an epoxy curing agent, a melamine curing agent, a carbodiimide curing agent, an aziridine curing agent, an oxazoline curing agent, and an isocyanate curing agent. The content ratio of the curing agent is not particularly limited, and is appropriately set depending on the purpose and use.

The above-described polyurethane resin and the above-described polyurethane dispersion have excellent storage stability because the neutralizing agent contains a primary to secondary monoamine.

Furthermore, when the polyisocyanate component contains bis(isocyanatomethyl)cyclohexane and/or xylylene diisocyanate, and the polyol compound contains a short chain diol having 2 to 6 carbon atoms in the above-described polyurethane resin, the polyurethane resin has particularly excellent gas barrier properties.

Therefore, the above-described polyurethane dispersion is preferably used as a gas barrier coating material.

2. Gas Barrier Coating Material

The gas barrier coating material contains the above-described polyurethane dispersion (PUD). The gas barrier coating material contains the above-described polyurethane resin (extended-type polyurethane resin, capped-type polyurethane resin, and/or extended·capped composite polyurethane resin).

The gas barrier coating material may further contain a curing agent. Examples of the curing agent include, for example, an epoxy curing agent, a melamine curing agent, a carbodiimide curing agent, an aziridine curing agent, an oxazoline curing agent, and an isocyanate curing agent. The content ratio of the curing agent is not particularly limited, and is appropriately set depending on the purpose and use.

Preferably, the gas barrier coating material consists of the above-described polyurethane dispersion (PUD) or consists of the above-described polyurethane dispersion (PUD) and the above-described curing agent.

Furthermore, the solid content concentration of the gas barrier coating material can be adjusted as necessary. For example, water can be removed from the polyurethane dispersion (PUD) in a known method for a solid content concentration of the gas barrier coating material. Water can be added to the polyurethane dispersion (PUD) to adjust the solid content concentration.

The solid content concentration of the gas barrier coating material is, for example, 10% by mass or more, preferably 15% by mass or more, and more preferably 20% by mass or more. Furthermore, the solid content concentration of the gas barrier coating material is, for example, 60% by mass or less, preferably 50% by mass or less, and more preferably 40% by mass or less.

The above-described gas barrier coating material contains a polyurethane resin. Therefore, the above-described gas barrier coating material can form a coating layer (barrier coating layer) having excellent gas barrier properties.

3. Operations and Effects

In the above-described polyurethane dispersion and gas barrier coating material, the polyurethane resin contains a reaction product of an isocyanate group-terminated prepolymer with a chain extender and/or an end-capping agent. The isocyanate group-terminated prepolymer contains the reaction product of the polyisocyanate component with the active hydrogen group-containing component. The active hydrogen group-containing component contains a polyol compound and an active hydrogen group-containing compound containing an anionic group. The anionic group is neutralized by a neutralizing agent. The neutralizing agent contains a monoamine compound having a primary amino group or a secondary amino group.

As a result, the above-described polyurethane dispersion and gas barrier coating material have excellent storage stability.

**In** the method of producing the above-described polyurethane dispersion, first, a polyisocyanate component is allowed to react with an active hydrogen group-containing component containing a polyol compound and an active hydrogen group-containing compound containing an anionic group to synthesize an isocyanate group-terminated prepolymer. Next, the anionic group is neutralized by a primary neutralizing agent containing a monoamine compound having a tertiary amino group. Next, the isocyanate group-terminated prepolymer is allowed to react with a chain extender to obtain a polyurethane resin. Thereafter, at least a part of the primary neutralizing agent is substituted with a secondary neutralizing agent containing a monoamine compound having a primary amino group or a secondary amino group.

As a result, according to the above-described method of producing a polyurethane dispersion, a polyurethane dispersion having excellent storage stability can be produced.

Furthermore, when the polyisocyanate component contains bis(isocyanatomethyl)cyclohexane and/or xylylene diisocyanate, and the polyol compound contains a short chain diol having 2 to 6 carbon atoms in the above-described polyurethane resin, the polyurethane resin has particularly excellent gas barrier properties. In particular, when the polyol compound does not contain a high molecular weight polyol and consists of a low molecular weight polyol, the polyurethane resin has particularly excellent gas barrier properties.

As a result, according to the above-described polyurethane dispersion, a polyurethane layer having excellent gas barrier properties can be produced.

Meanwhile, when the polyol compound does not contain a high molecular weight polyol and consists of a low molecular weight polyol, the urethane group·urea group concentration of the polyurethane resin is relatively high as described above. In such a case, the aggregation derived from the urethane group·urea group easily occurs, and storage stability may be lowered.

In contrast, the above-described polyurethane dispersion has storage stability improved by a monoamine compound having a primary amino group or a secondary amino group. That is, even when the urethane group·urea group concentration is relatively high, the aggregation of the polyurethane resin can be suppressed.

That is, in the case where the polyurethane resin has a relatively high urethane group·urea group concentration and excellent gas barrier properties, excellent storage stability is particularly effectively imparted to the above-described polyurethane dispersion.

Therefore, the above-described polyurethane dispersion and gas barrier coating material can be suitably used in the production of a laminate including a substrate and a polyurethane layer in various industrial fields.

4. Laminate

The laminate including a polyurethane layer includes, for example, a substrate and a polyurethane layer disposed on one side of the substrate in the thickness direction.

Examples of the substrate include a plastic substrate, a fiber substrate, a metallic substrate, and a ceramic substrate. As the substrate, preferably a plastic substrate and a fiber substrate are used. The plastic substrate is, for example, a film made of plastic. Examples of the plastic include a thermoplastic resin and a thermosetting resin, and preferably a thermoplastic resin is used. Examples of the thermoplastic resin include polyolefin resin, polyester resin, polyamide resin, polyvinyl resin, acrylic resin, polycarbonate resin, and cellulose resin. As the thermoplastic resin, preferably a polyolefin resin and a polyester resin are used. Examples of the plastic substrate include, for example, a cast substrate, an uniaxially oriented substrate, and a biaxially oriented substrate, and preferably a biaxially oriented substrate is used. Examples of the fiber substrate include, for example, paper, cloth, and wood. These may be used alone or in combination of two or more. The substrate may be subjected to a surface treatment, as necessary. Examples of the surface treatment include a vapor deposition treatment, an anchor coating treatment, and a plasma treatment.

The substrate has a thickness of, for example, 1 $\mu$m or more, preferably 3 $\mu$m or more. Furthermore, the thickness of the substrate is, for example, 500 $\mu$m or less, preferably 200 $\mu$m or less.

The polyurethane layer includes a dried product of the polyurethane dispersion, and preferably consists of a dried product of the polyurethane dispersion.

The polyurethane layer is laminated, for example, on one surface or both surfaces of the substrate. Such a laminate is obtained, for example, by applying the above-described polyurethane dispersion (gas barrier coating material) to one surface or both surfaces of the substrate and drying it. The polyurethane layer is preferably a gas barrier layer.

The method of applying the polyurethane dispersion (gas barrier coating material) is not particularly limited. Examples of the application method include a dip coating method, a gravure coating method, a reverse coating method, a roll coating method, a bar coating method, a spray coating method, and an air knife coating method. The conditions for drying the polyurethane dispersion (gas barrier coating material) are not particularly limited. For example, the drying temperature is, for example, 40°C or more, preferably 50°C or more. The drying temperature is, for example, 200°C or less, preferably 180°C or less. The drying time is, for example, 1 second or more, preferably 30 seconds or more. The drying time is, for example, 10 minutes or less, preferably 5 minutes or less.

By the above-described drying, a polyurethane layer is formed on one surface or both surfaces of the substrate. The polyurethane layer is a dry coating film of the polyurethane dispersion. When the polyurethane dispersion is a gas barrier coating material, the polyurethane layer is a dry coating film of the gas barrier coating material and is a barrier coating layer.

The amount (dry mass) of the polyurethane layer is, for example, 0.1 g/m$^2$ or more, preferably 0.2g/m$^2$ or more. The amount (dry mass) of the polyurethane layer is, for example, 10g/m$^2$ or less, preferably 7g/m$^2$ or less.

The above-described polyurethane layer may be, for example, an anchor coat layer (undercoat layer) for the inorganic vapor deposition layer (metal layer). That is, the above-described polyurethane dispersion may be an anchor coating agent for the inorganic vapor deposition layer.

That is, as described above, the substrate may be subjected to a vapor deposition treatment. In other words, the substrate can include a substrate body (e.g., a plastic substrate, a fiber substrate, a metal substrate, and a ceramic substrate) and an inorganic vapor deposition layer.

In such a case, the above-described polyurethane dispersion is applied, for example, to one surface or both surfaces of the substrate body before the substrate is subjected to a vapor deposition treatment.

In such case, by drying the polyurethane dispersion, a polyurethane layer is formed on one surface or both surfaces of the substrate body. Thereafter, an inorganic vapor deposition layer is laminated on the polyurethane layer by a known method.

According to the above method, a laminate including a substrate body, a polyurethane layer laminated on the substrate body, and an inorganic vapor deposition layer laminated on the polyurethane layer is obtained.

In such a laminate, the polyurethane layer is an anchor coat layer (undercoat layer) for the inorganic vapor deposition layer. That is, the laminate includes an anchor coat layer (undercoat layer) consisting of the above-described polyurethane layer. The polyurethane dispersion is an anchor coating agent.

The amount (dry mass) of the anchoring coating is, for example, $0.1g/m^2$ or more, preferably $0.2g/m^2$ or more. The amount (dry mass) of the anchoring coating is, for example, $10g/m^2$ or less, preferably $7g/m^2$ or less.

The above-described polyurethane layer may be, for example, an overcoat layer for the inorganic vapor deposition layer. That is, the above-described polyurethane dispersion may be an overcoat agent for the inorganic vapor deposition layer.

More specifically, the substrate may be subjected to a vapor deposition treatment, and an inorganic vapor deposition layer may be laminated on one surface or both surfaces of the substrate body. In such a case, the above-described polyurethane dispersion is applied to the surface of the inorganic vapor deposition layer.

In such a case, by drying the polyurethane dispersion, a polyurethane layer is formed on the surface of the inorganic vapor deposition layer.

According to the above method, a laminate including a substrate body, an inorganic vapor deposition layer laminated on the substrate body, and a polyurethane layer laminated on the inorganic vapor deposition layer is obtained.

**In** such a laminate, the polyurethane layer is an overcoat layer for the inorganic vapor deposition layer. That is, the laminate includes an overcoat layer consisting of the above-described polyurethane layer. The polyurethane dispersion is an overcoat agent.

The amount (dry mass) of the overcoat layers is, for example, $0.1g/m^2$ or more, preferably $0.2g/m^2$ or more. The amount (dry mass) of the overcoat layers is, for example, $10g/m^2$ or less, preferably $7g/m^2$ or less.

Furthermore, the laminate may include both the above-described anchor coat layer (undercoat layer) and the above-described overcoat layer.

More specifically, for example, before the substrate is subjected to a vapor deposition treatment, the above-described polyurethane dispersion is applied to one surface or both surfaces of the substrate body, and dried, thereby forming an anchor coat layer (undercoat layer). Next, the substrate is subjected to a vapor deposition treatment by a known method, thereby laminating an inorganic vapor deposition layer on the anchor coat layer (undercoat layer). Thereafter, the above-described polyurethane dispersion is applied to, for example, the inorganic vapor deposition layer and dried, thereby forming an overcoat layer.

According to the above method, a laminate including a substrate body, an anchor coat layer laminated on the substrate body, an inorganic vapor deposition layer laminated on the anchor coat layer, and an overcoat layer laminated on the inorganic vapor deposition layer is obtained.

Preferably, when the polyurethane resin contained in the above-described polyurethane dispersion has a relatively high urethane group·urea group concentration and has excellent gas barrier properties, the laminate includes the above-described overcoat layer and/or the above-described anchor coat layer. Such a laminate has particularly excellent gas barrier properties.

Furthermore, such a laminate is produced using the above-described polyurethane dispersion having excellent storage stability, and thus has excellent productivity.

In the laminate including the polyurethane layer, a sealing layer can be formed between the substrate and the polyurethane layer as necessary. For example, in the case where the substrate is made of paper, in order to suppress the impregnation of the substrate with the polyurethane dispersion, preferably, a seal coating material (for example, an acrylic coating material) is applied onto at least one surface of the paper substrate and dried to form a sealing layer. Furthermore, a functional layer can be formed on the surface of the polyurethane layer as necessary. Examples of the functional layer include a design layer, a surface protective layer, and a heat seal layer, and preferably a heat seal layer is formed thereon. The heat seal layer is not particularly limited, and is formed of a known heat seal coating material.

The total thickness of the laminate is, for example, 5 μm or more, preferably 10 μm or more. The total thickness of the laminate is, for example, 1 mm or less, preferably 0.5 mm or less.

Such a laminate can be suitably used, for example, in the production of food packaging materials.

Examples

Next, the present invention is described based on Examples and Comparative Examples. The present invention is however not limited by the following Examples. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

1. Raw Materials

<High Molecular Weight Polyol (Polyester Polyol)>

Preparation Example 1

228.9 parts by mass of isophthalic acid, 46.4 parts by mass of ethylene glycol, and 263.3 parts by mass of neopentyl glycol were esterified at 180-220°C under nitrogen stream.
A predetermined amount of water was distilled from the reaction product of the above-described esterification reaction. Then, 278.7 parts by mass of sebacic acid was added to the reaction product, and these were esterified at 180-220°C. In this manner, a polyester polyol having a number-average molecular weight of about 2500 was obtained.

<Nonionic Side Chain-containing Diol>

Preparation Example 2

A four-neck flask equipped with a stirrer, a thermometer, a reflux tube, and a nitrogen inlet tube was charged with 1000 parts by mass of methoxypolyethylene glycol (number-average molecular weight: 1000, manufactured by TOHO Chemical Industry Co.,Ltd.) and 1682 parts by mass of 1,6-hexamethylene diisocyanate (manufactured by Mitsui Chemicals, Inc.), and these were allowed to react at 90°C under a nitrogen atmosphere for 9 hours. The reaction product solution by the above-described reaction was subjected to thin-film distillation to remove unreacted 1,6-hexamethylene diisocyanate. In this manner, a methoxy-capped-one-end polyoxyethylene group-containing monoisocyanate was obtained.
A four-neck flask equipped with a stirrer, a thermometer, a reflux tube, and a nitrogen inlet tube was charged with 82.5 parts by mass of diethanolamine. The contents of the flask were cooled by air, and 917.5 parts by mass of the above-described methoxy-capped-one-end polyoxyethylene group-containing monoisocyanate was added dropwise to the flask under a nitrogen atmosphere. In the dropwise addition, the temperature of the contents of the flask was adjusted to less than 70°C. After the completion of the dropwise addition, the contents of the flask were stirred at 70°C under a nitrogen atmosphere for about 1 hour. Furthermore, it was confirmed that the isocyanate group of the contents of the flask disappeared. In this manner, a methoxy-capped-one-end polyoxyethylene side chain-containing diol was obtained.

2. Polyurethane Dispersion

<Extended-type Polyurethane Resin>

Examples 1-9 (PUDS 1-9), Examples 11-24 (PUDS 11-24), and Comparative Examples 1-2 (PUDS 25-26)

[i] Prepolymer Synthesis Step

In the formulations shown in Tables 1-3, a polyisocyanate component, an active hydrogen group-containing component, and an organic solvent were mixed and allowed to react at 65-70°C under a nitrogen atmosphere. The reaction was continued until the isocyanate group concentration of the reaction solution reached a predetermined value shown in Table. In this manner, a reaction solution containing an isocyanate group-terminated prepolymer was obtained. The reaction solution was cooled to 40°C

[ii] Neutralization Step

Next, a primary neutralizing agent shown in Tables 1-3 was added to the above-described reaction solution to neutralize the isocyanate group-terminated prepolymer. Trimethylamine (TMA) was dissolved in acetonitrile and used as a trimethylamine solution (concentration 13% by mass).

[iii] Chain Extension Step

Next, by using a homodisper, the neutralized isocyanate group-terminated prepolymer was dispersed in ion-exchange water. In this manner, a dispersion of the isocyanate group-terminated prepolymer was obtained.

Next, a chain extender was dissolved in the ion-exchange water in accordance with the formulations shown in Tables 1 to 3 to obtain a chain extender solution. The chain extender solution was added to the dispersion of the isocyanate group-terminated prepolymer, and the isocyanate group-terminated prepolymer was subjected to a chain extension reaction for 1 hour. In this manner, an extended-type polyurethane resin was obtained.

Next, by using an evaporator, the organic solvent and the ion-exchange water were distilled off from the reaction solution at a water bath temperature of 50°C and under reduced pressure.

In Examples 1 to 9, Examples 12 to 24, and Comparative Examples 1 to 2, the depressurization time was set to 4 to 5 hours. In this manner, the carbonate ions in the reaction solution were removed (decarboxylated). On the other hand, in Example 11, the depressurization time was set to 1 hour. That is, the carbonate ions in the reaction solution were not sufficiently removed (decarboxylated).

[iv] Substitution Step

Thereafter, ion-exchange water was added to the reaction solution to adjust the solid content concentration to 30% by mass. In this manner, a primary polyurethane dispersion (primary PUD) was obtained.

Next, the temperature of the primary polyurethane dispersion (primary PUD) was adjusted to 40°C. Next, a secondary neutralizing agent shown in Tables 1 to 3 was added to the primary polyurethane dispersion (primary PUD), and the primary polyurethane dispersion (primary PUD) was stirred at 40°C and atmospheric pressure for 30 minutes. In this manner, a part of the primary neutralizing agent was substituted with the secondary neutralizing agent.

In this manner, a substitution treatment liquid was obtained. Next, a part of the free primary neutralizing agent, the free secondary neutralizing agent, and the ion-exchange water was distilled off from the above-described substitution treatment liquid using an evaporator. Furthermore, as necessary, ion-exchange water was added to the substitution treatment liquid, thereby, adjusting the solid content concentration of the substitution treatment liquid to 30% by mass.

Furthermore, in Examples 21 to 23, after the above-described substitution (first substitution) and distillation (first distillation), a secondary neutralizing agent shown in Tables 1 to 3 was further added to the substitution treatment liquid having a solid content concentration of 30% by mass, and the substitution treatment liquid was stirred at 40°C and under atmospheric pressure for 30 minutes. In this manner, a part of the primary neutralizing agent was further substituted with the secondary neutralizing agent. Next, a part of the free primary neutralizing agent, the free secondary neutralizing agent, and the ion-exchange water was distilled off from the above-described substitution treatment liquid using an evaporator. Furthermore, as necessary, ion-exchange water was added to the substitution treatment liquid, thereby, adjusting the solid content concentration of the substitution treatment liquid to 30% by mass.

In Comparative Examples 1 to 2, a secondary neutralizing agent was not added.

That is, in Examples 1-9, Examples 11-20, and Example 24, a part of the primary neutralizing agent was substituted with the secondary neutralizing agent once. In Examples 21 to 23, a part of the primary neutralizing agent was substituted with the secondary neutralizing agent twice. On the other hand, in Comparative Examples 1 to 2, a part of the primary neutralizing agent was not substituted with a secondary neutralizing agent.

In this manner, a secondary polyurethane dispersion containing an extended-type polyurethane resin was obtained. The secondary polyurethane dispersion was used as a gas barrier coating material.

<Capped-type Polyurethane Resin>

Example 10 (PUD 10)

[i] Prepolymer Synthesis Step

In the formulations shown in Tables 1-3, a polyisocyanate component, an active hydrogen group-containing component, and an organic solvent were mixed and allowed to react at 65-70°C under a nitrogen atmosphere. The reaction was continued until the isocyanate group concentration of the reaction solution reached a predetermined value shown in Tables. In this manner, a reaction solution containing an isocyanate group-terminated prepolymer was obtained. The reaction solution was cooled to 40°C.

[ii] Neutralization Step

Next, a neutralizing agent shown in Tables 1-3 was added to the above-described reaction solution to neutralize the isocyanate group-terminated prepolymer.

[iii] Capping/substitution Step

Next, by using a homodisper, the neutralized isocyanate group-terminated prepolymer was dispersed in ion-exchange water. In this manner, a dispersion of the isocyanate group-terminated prepolymer was obtained.

Next, an end-capping agent was added to the dispersion of the isocyanate group-terminated prepolymer in accordance with the formulations shown in Tables 1-3, and the isocyanate group-terminated prepolymer was subjected to an end-capping reaction for 1 hour.

Furthermore, along with the end-capping reaction, a part of the primary neutralizing agent was substituted with the end-capping agent. In this manner, a capped-type polyurethane resin was obtained.

Next, by using an evaporator, the organic solvent and the ion-exchange water were distilled off from the reaction solution at a water bath temperature of 50°C and under reduced pressure. The depressurization time was set to 4 to 5 hours. In this manner, the carbonate ions in the reaction solution were removed (decarboxylated).

Thereafter, ion-exchange water was added to the reaction solution to adjust the solid content concentration to 30% by mass. In this manner, a polyurethane dispersion containing the capped-type polyurethane resin was obtained.

3. Physical Property Measurement

(1) Concentration of Urethane and Urea Groups

The concentration of urethane and urea groups of the polyurethane resin was calculated based on the charge ratio of the raw material components.

(2) Average Particle Diameter

The average particle diameter immediately after the production of the polyurethane dispersion was measured using a dense particle size analyzer FPAR-1000 (manufactured by OTSUKA ELECTRONICS CO.,LTD).

(3) Content Ratio of Primary to Secondary Monoamine

<Primary to Secondary Monoamine Concentration (% by mass) and Tertiary Monoamine Concentration (% by mass)>

Gas chromatograms of the polyurethane dispersion were obtained under the following conditions for gas chromatograph (GC) analysis.

The Gas chromatogram of the primary to secondary monoamine and the gas chromatogram of the tertiary monoamine were obtained under the following conditions for gas chromatograph (GC) analysis. From the area values of the gas chromatograms, a calibration curve for the primary to secondary monoamine and a calibration curve for the tertiary monoamine were created.

Based on the gas chromatograms of the polyurethane dispersion and calibration curves, the concentration (% by mass) of the primary to secondary monoamine and the concentration (% by mass) of the tertiary monoamine in the polyurethane resin were calculated.

Conditions for Gas Chromatography (GC) Analysis
Sample Concentration; 10% by mass (diluted with ion-exchange water)
Equipment; Nexis GC-2030 (manufactured by Shimadzu Corporation)
Column; DB-5 (manufactured by Agilent Technologies)
Oven temperature; temperature rise at 10°C/min from 50°C to 250°C after retention at 50°C for 5 minutes
Inlet temperature; 250°C
Detector temperature; 260°C
Carrier gas; helium
Detection method; FID

(4) Primary to Secondary Monoamine/Neutralizing Agent (mol%)

The content ratio (primary to secondary monoamine/neutralizing agent, mole %) of the primary to secondary monoamine in the neutralizing agent was calculated by the following formula.

Content Ratio (mole %) of Primary to Secondary Monoamine in Neutralizing Agent =100x[Primary to Secondary Monoamine Concentration (mass%)/Primary to Secondary Monoamine Molecular Weight] /[(Primary to Secondary Monoamine Concentration (mass%)/Primary to Secondary Monoamine Molecular Weight)+(Tertiary Monoamine Concentration (mass%)/Tertiary Monoamine Molecular Weight)]

(5) Number-average Molecular Weight of Polyurethane Resin

0.1g of the polyurethane dispersion was dissolved in 10mL of dimethylacetamide (DMAc) as an eluent to produce a sample solution. The sample solution was allowed to stand overnight. The sample solution was filtered through a 0.45μm membrane filter to obtain a filtrate.
The filtrate was measured by GPC under the following conditions for a measurement by gel permeation chromatography (GPC), thereby determining the number-average molecular weight (in terms of polystyrene).

<Conditions for Measurement by Gel Permeation Chromatography (GPC)>

Analyzer; TOSOH HLC-8320GPC+UV-8320
Analyzer; TOSOH GPC Work station EcoSEC-WS
Column; TOSOH TSK-GEL TSK gel α-M Column No.G0032+G0033
Eluent; 0.01 mol-LiBr/1000 ml-DMAc(N,N-Dimethylacetamide)
Detector: RI 40°C
Column temperature: 40°C
Flow rate; 0.6mL/min
Injection volume; 100μL

(6) Carbonate Ion Concentration (ppm)

The carbonate ion concentration in the polyurethane dispersion was quantified by an electrophoresis system.
That is, a sample of the polyurethane dispersion was fractionately weighed. The sample was appropriately diluted and dissolved with ultrapure water to prepare a quantitative sample solution. The quantitative sample solution and a standard solution were measured by using the following electrophoresis system and measurement conditions. Furthermore, a sample measurement solution to which a standard solution having a known concentration was added was prepared. Then, an addition collection test was carried out. Thereafter, the carbonate ion concentration with respect to the total amount of the polyurethane dispersion was determined by a one-point calibration curve quantitation method.

<Electrophoresis System Device and Measurement Conditions>

Device: manufactured by Agilent Technologies, Inc., 7100 capillary electrophoresis system
Buffer: manufactured by Agilent Technologies, Inc., toxic anion analytical buffer

4. Evaluations

(1) Storage Stability

The polyurethane dispersion was stored at 60°C for 28 days. Thereafter, the average particle diameter of the polyurethane dispersion after the storage was measured using a dense particle size analyzer FPAR-1000 (manufactured by OTSUKA ELECTRONICS CO.,LTD).
Then, the increase rate of the average particle diameter (D2) of the polyurethane dispersion after the storage with respect to the average particle diameter (D1) of the polyurethane dispersion immediately after the production was calculated by the following formula. Based on the increase rate of the average particle diameter, the storage stability was evaluated by the following criteria.

Increase rate (%) of average particle diameter = 100 × average particle diameter (D2) after storage/average particle diameter (D1) immediately after production

    5; The increase rate of average particle size was less than 150%.
    4; The increase rate of average particle diameter was 150% or more and less than 200%.
    3; The increase rate of average particle diameter was 200% or more and less than 250%.
    2; The increase rate of average particle diameter was 250% or more and less than 300%.
    1; The increase rate of the average particle diameter was 300% or more.

(2) Water Resistance

A polyethylene terephthalate film (biaxially oriented polyester film, trade name: Toyobo ester film E5102, manufactured by TOYOBO CO., LTD., thickness: 12μm) was prepared as a substrate. The polyurethane dispersion was applied to the substrate by using a bar coater. The application amount was adjusted so that the dried coating film thickness was 3g/m$^2$.

Next, the substrate to which the polyurethane dispersion was applied was dried at 110°C in a drying oven for 1 minute. In this manner, a laminate including a substrate and a polyurethane layer was obtained.

Thereafter, the polyurethane layer was rubbed with a cotton swab wet with water. The number of times of rubbing the polyurethane layer until the polyurethane layer was peeled off from the substrate was recorded. In the case where the polyurethane layer was not peeled off even after 10 rubs, the number of times of rubbing the polyurethane layer was determined as 10.

5. Anchor Coating Agent

Preparation Examples AC1 to AC6

To the above-described PUD 23 of Example 23, water and an aqueous solvent were added to adjust the solid content concentration in accordance with the description in Table 4. As necessary, a curing agent was further added thereto. As described above, an anchoring agent (AC) was prepared.

6. Overcoat Agent

Preparation Examples OC1 to OC6

To the above-described PUD 23 of Example 23, water and an aqueous solvent were added to adjust the solid content concentration in accordance with the description in Table 4. As necessary, a curing agent was further added thereto. As described above, an overcoat agent (OC) was prepared.

7. Laminate 1

Examples 26 to 31

A laminate was obtained in accordance with the description in Table 4. More specifically, first, a polyolefin substrate (substrate body) was prepared in accordance with the description in Table 4.

Next, an anchor coating agent was applied to one surface of a biaxially oriented polypropylene film (hereinafter referred to as a polyolefin substrate (substrate body)) using a bar coater in accordance with the description in Table 4. Next, the anchor coating was dried at 80°C for 1 minute. In this manner, a polyurethane layer (anchor coat layer) was formed on the surface of the polyolefin substrate. The application amount of the anchor coating agent was adjusted so that the dry mass (g/m$^2$) was a value as shown in Table 4.

Thereafter, the polyolefin substrate (substrate body) and the polyurethane layer (anchor coat layer) were set in a vacuum vapor deposition apparatus (manufactured by ULVAC). Then, aluminum, aluminum oxide, or silicon oxide was vapor-deposited on the surface of the polyurethane layer (anchor coat layer) ($1 \times 10^{-4}$ Pa vacuum condition, RH method) in accordance with the description in Table 4, thereby forming an inorganic vapor deposition layer.

The inorganic vapor deposition layer made of aluminum (AL) had a thickness of 50 nm. Furthermore, the inorganic vapor deposition layer made of aluminum oxide (AlOx) had a thickness of 20 nm. Furthermore, the inorganic vapor deposition layer made of silicon oxide (SiOx) had a thickness of 30 nm.

Thereafter, an overcoat agent was applied thereto using a bar coater in accordance with the description in Table 4. Next, the overcoat agent was dried at 80°C for 1 minute. In this manner, a polyurethane layer (overcoat layer) was formed on the surface of the inorganic vapor deposition layer. The application amount of the overcoat agent was adjusted so that the dry mass (g/m$^2$) was the value shown in Table 4.

As described above, a laminate 1 including a polyolefin substrate, a polyurethane layer (anchor coat layer) disposed on the polyolefin substrate, an inorganic vapor deposition layer disposed on the polyurethane layer (anchor coat layer), and/or a polyurethane layer (overcoat layer) disposed on the inorganic vapor deposition layer was obtained.

In Examples 26 to 31, the layer structure of the laminate 1 was as follows.

Laminate 1; polyolefin substrate/anchor coat layer/inorganic vapor deposition layer/overcoat layer

Example 32

Water and an aqueous solvent were added to the above-described PUD 23 of Example 23 in accordance with the description in Table 5 to adjust the solid content concentration. As necessary, a curing agent was further added thereto. As descried above, a gas barrier coating material was prepared.

A laminate was obtained in accordance with the description in Table 5. More specifically, first, a polyolefin substrate (substrate body) was prepared in accordance with the description in Table 5.

Next, a gas barrier coating material was applied to one surface of the polyolefin substrate (substrate body) using a bar coater in accordance with the description in Table 4. Next, the gas barrier coating material was dried at 80°C for 1 minute. In this manner, a polyurethane layer (gas barrier layer) was formed on the surface of the polyolefin substrate. The application amount of the gas barrier coating material was adjusted so that the dry mass (g/m$^2$) was a value shown in Table 5.

As described above, a laminate 1 including a polyolefin substrate and a polyurethane layer (gas barrier layer) disposed on the polyolefin substrate was obtained.

In Example 32, the layer structure of the laminate 1 was as follows.

Laminate 1; polyolefin substrate/gas barrier layer

8. Evaluations of Laminate 1

The gas barrier properties and adhesiveness of the laminate 1 were evaluated by the following method. The results are shown in Tables 4 and 5.

(1) Laminate film

A polyurethane adhesive was applied to the inorganic vapor deposition layer of the laminate so as to have a dry thickness 3.0g/m$^2$, and dried. The polyurethane adhesive was a mixture of the following main agent and curing agent and ethyl acetate. More specifically, ethyl acetate was added to a mixture of a main agent and a curing agent to adjust the solid content concentration of the mixture to 25% by mass.

Main agent: Takelac A-626, manufactured by manufactured by Mitsui Chemicals, Inc., 8.0 parts by mass

Curing agent; Takenate A-50, manufactured by Mitsui Chemicals, Inc., 1.0 parts by mass

Next, a cast polypropylene film (CPP, Tohcello CP RXC-22, #60, manufactured by Mitsui Chemicals Tohcello, Inc.) was laminated on the surface to which the polyurethane adhesive was applied, and aged at 40°C for 3 days. In this manner, a laminate film was obtained.

(2) Gas barrier properties

The oxygen permeation rate (cc/m$^2$·day·atm) of the laminated film was measured under the following conditions in conformity with JIS K7126-2 (2006).

Device; an oxygen permeability tester, trade name OX-TRAN2/20, manufactured by MOCON
Temperature; 20°C
Humidity; 80%RH

Next, the laminate film was immersed in hot water at 121°C for 30 minutes and thereby hydrothermally treated. Thereafter, the oxygen transmission rate of the hydrothermally treated laminate film was measured under the above-described conditions.

Thereafter, the increase rate of the oxygen transmission rate was determined by the following formula. The higher the value of the increase rate of the oxygen transmission rate is, the lower the evaluation of the heat water resistance is.

Increase rate (%) of oxygen transmission rate =[(Oxygen transmission rate after hydrothermal treatment-Oxygen transmission rate before hydrothermal treatment)/Oxygen transmission rate before hydrothermal treatment]

(3) Adhesiveness

The laminate strength of the laminate film was measured by a T-peel test (15 mm width) in conformity with JIS K 6854 (1999).

More specifically, first, the biaxially oriented polypropylene film (the lowermost layer, BOPP) and the cast polypropylene film (the uppermost layer, CPP) were gripped and pulled in the opposite direction to expose the interface between the biaxially oriented polypropylene film (substrate) and the polyurethane layer (anchor coat layer). Then, the peel strength (laminate strength) of the interface between the biaxially oriented polypropylene film (substrate) and the polyurethane layer (anchor coat layer) was measured by a T-peel test.

Next, the laminate film was immersed in hot water at 121°C for 30 minutes and thereby hydrothermally treated. Thereafter, the peel strength (laminate strength) of the hydrothermally treated laminate film was measured under the same conditions as described above.

9. Laminate 2

(1) Paper substrate

As a paper substrate, a machine glazed (bleached) kraft paper (product-name; Shirogane, NIPPON PAPER INDUSTRIES CO., LTD., Basis Weight 67g/m$^2$) was prepared.

(2) Seal Coating Material

2193 parts by mass of ion-exchange water (a solvent) and 2.5 parts by mass of sodium dodecyl sulfate (a surfactant) were charged into a reaction vessel equipped with a stirrer, a reflux condenser, a dripping device, and a thermometer. The contents of the reaction vessel were heated to a temperature of 75°C while being stirred and subjected to nitrogen substitution.

7.5 parts by mass of potassium persulfate (a polymerization initiator) was added to the reaction vessel and dissolved in the contents of the reaction vessel while the internal temperature of the reaction vessel was maintained at 75°C. Thereafter, a monomer emulsion product prepared in advance was continuously added dropwise to the reaction vessel for 5 hours.

The monomer emulsion product was a raw material composition containing the following components.

Ion-exchange water (solvent) 900 parts by mass
Sodium dodecyl sulfate (surfactant) 5 parts by mass
Acrylamide (raw material monomer) 25 parts by mass
Methyl methacrylate (raw material monomer) 175 parts by mass
2-ethylhexylacrylate (raw material monomer) 1088 parts by mass
Methacrylic acid (raw material monomer) 80 parts by mass
Styrene (raw material monomer) 1133 parts by mass

After the dripping of the monomer emulsion was completed, the contents of the reaction vessel were aged for 3 hours. In this manner, the raw material monomer was polymerized to obtain a (meth)acrylic resin. Furthermore, an acrylic emulsion in which a (meth)acrylic resin was water-dispersed was obtained.

The acrylic emulsion was cooled to room temperature. Thereafter, ion-exchange water and ammonia water (a neutralizing agent) were added to the acrylic emulsion to adjust the solid content concentration to 41% by weight, and the pH was adjusted to 8.0.

In this manner, an acrylic emulsion obtained by dispersing a (meth)acrylic resin in water was obtained. The average particle diameter of the acrylic emulsion was 140nm. The average particle diameter was measured by a dynamic-light-scattering method (measuring device FPAR-1000, manufactured by OTSUKA ELECTRONICS CO.,LTD).

Thereafter, water was further added to the above-described acrylic emulsion (solid content concentration: 41% by mass), and mixed with a mixer for 5 minutes. In this manner, a seal coating material (a solid content concentration of 40% by mass) was prepared.

(3) Gas Barrier Coating Material

Preparation Example BC1

28.8 parts by mass of a dispersion of a swellable layered inorganic compound (trade name: ME300-B4T, synthetic mica, manufactured by Katakura & Co-op Agri Corporation, solid content concentration 7.8%), 42.5 parts by mass of PUD 23 of Example 23, and 28.7 parts by mass of ion-exchange water were mixed with a mixer for 5 minutes. As described above, a gas barrier coating material (BC) having a solid content concentration of 15% by mass was obtained.

Preparation Example BC2

22.5 parts by mass of a dispersion of a swellable layered inorganic compound (NTS-10NC, manufactured by TOPY INDUSTRIES LIMITED, solid content concentration 10% by mass), 42.5 parts by mass of Example 23, and 35.0 parts by mass of ion-exchange water were mixed with a mixer for 5 minutes. As described above, a gas barrier coating material (BC) having a solid content concentration of 15% by mass was obtained.

(4) Heat-seal coating material

50 parts by mass of an ethylene-acrylic acid copolymer and 50 parts by mass of an ethylene-isobutyl acrylate-methacrylic acid copolymer were melt-kneaded. In this manner, a resin composition (anionic group-containing polyolefin resin) was obtained.
With respect to the total amount of the ethylene-acrylic acid copolymer, the content ratio of the structural unit derived from ethylene was 79.5% by mass, and the content ratio of the structural unit derived from acrylic acid was 20.5% by mass.
Furthermore, with respect to the total amount of the ethylene-isobutyl acrylate-methacrylic acid copolymer, the content ratio of the structural unit derived from ethylene was 80.0% by mass, the content ratio of the structural unit derived from isobutyl acrylate was 10.0% by mass, and the content ratio of the structural unit derived from methacrylic acid was 10.0% by mass.
The above-described resin composition, 4.0 parts by mass of potassium hydroxide (neutralizing agent) and 140 parts by mass of deionized water were put into a reaction vessel and stirred. The contents of the reaction vessel were heated to 150°C and the temperature was kept for 4 hours. In this manner, the resin composition was neutralized with potassium hydroxide (neutralizing agent). Thereafter, the contents of the reaction vessel were cooled to room temperature.
As described above, a heat-seal coating material having a solid content concentration of 42% by mass was obtained.

(5) Laminate 2

Examples 33 and 34

A laminate 2 was obtained in accordance with the description in Table 6.
That is, a seal coating material was applied to the glazed surface of a paper substrate (machine-glazed kraft paper) using a bar coater. The application amount was adjusted so that the dry mass was 10g/m$^2$. Next, the coating film of the seal coating material was dried at 120°C for 60 seconds. In this manner, a sealing layer was formed.
Next, a gas barrier coating material shown in Table 6 was applied to the surface of the sealing layer with a bar coater. The application amount was adjusted so that the dry mass was the value (g/m$^2$) shown in Table 6. Next, the coating film of the gas barrier coating material was dried at 120°C for 60 seconds. In this manner, a gas barrier layer was formed on the surface of the sealing layer.
Thereafter, a heat-seal coating material shown in Table 6 was applied to the surface of the gas barrier layer with a bar coater. The application amount was adjusted so that the dry mass was the value (g/m$^2$) shown in Table 6. Next, the coating film of the heat-seal coating material was dried at 120°C for 60 seconds. In this manner, a heat seal layer was formed on the surface of the gas barrier layer. As described above, a laminate 2 was obtained.
In Examples 33 and 34, the layer structure of the laminate 2 was as follows.
Laminate 2; paper substrate/sealing layer/gas barrier layer/heat seal layer

The dry mass of the sealing layer was calculated by subtracting the mass of the paper substrate from the total mass of the laminate (two layers) including the paper substrate and the sealing layer.

Furthermore, the dry mass of the gas barrier layer was calculated by subtracting the total mass of the laminate (two layers) including the paper substrate and the sealing layer from the total mass of the laminate (three layers) including the paper substrate, the sealing layer, and the gas barrier layer.

The dry mass of the heat seal layer was calculated by subtracting the total mass of the laminate (three layers) including the paper substrate, the sealing layer, and the gas barrier layer from the total mass of the laminate (four layers) including the paper substrate, the sealing layer, the gas barrier layer, and the heat seal layer.

10. Evaluations of Laminate 2 (Paper Substrate)

The oxygen transmission rate, water vapor transmission rate, and heat seal strength of the laminate 2 were evaluated by the following methods. The results are shown in Table 6.

(1) Oxygen transmission rate (OTR) of Laminate

The oxygen transmission rate ($cc/m^2 \cdot day \cdot atm$) of the laminate 2 was measured using an oxygen permeability tester (MOCON, OX-TRAN 2/22H). The conditions for the measurement (temperature (°C) and relative-humidity (RH %)) are shown in Table 6.

(2) Water Vapor Transmission Rate (WVTR) of Laminate

The water vapor transmission rate ($g/m^2 \cdot day$) of the laminate 2 was measured using a water vapor transmission rate analyzer (MOCON, PARMATRAN-W 3/34 G). The conditions for the measurement (temperature (°C) and relative-humidity (RH %)) are shown in Table 6.

(3) Heat-seal Strength

Two laminates 2 were prepared. The heat seal layers of the two laminates were brought into contact with each other and heat-sealed under the conditions of 140°C, 1 second, and $2kg/cm^2$. The heat-seal strength (kg/15mm) was measured with a tensile tester (article number 201X) manufactured by INTESCO co.,ltd.

[Table 1]

Table 1

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| **PUD** | | | | | PUD1 | PUD2 | PUD3 | PUD4 | PUD5 | PUD6 | PUD7 | PUD8 | PUD9 |
| Blending formulations (parts by mass) | Polyisocyanate component | | m-XDI | | 148.2 | 148.2 | 148.2 | 148.2 | 148.2 | 148.2 | 148.2 | 148.2 | 148.2 |
| | | | $H_{12}MDI$ | | 25.8 | 25.8 | 25.8 | 25.8 | 25.8 | 25.8 | 25.8 | 25.8 | 25.8 |
| | | | HDI | | - | - | - | - | - | - | - | - | - |
| | | | $H_6XDI$ | | - | - | - | - | - | - | - | - | - |
| | Active hydrogen group-containing component | Low molecular weight polyol | Ethylene glycol | | 29.9 | 29.9 | 29.9 | 29.9 | 29.9 | 29.9 | 29.9 | 29.9 | 29.9 |
| | | | Triethylene glycol | | - | - | - | - | - | - | - | - | - |
| | | | Trimethylol propane | | 2.3 | 2.3 | 2.3 | 2.3 | 2.3 | 2.3 | 2.3 | 2.3 | 2.3 |
| | | | D-400 | | - | - | - | - | - | - | - | - | - |
| | | High molecular weight polyol | UH200 | | - | - | - | - | - | - | - | - | - |
| | | | Preparation Example 1 | | - | - | - | - | - | - | - | - | - |
| | | Carboxy group-containing diol | Dimethylol propionic acid | | 17.0 | 17.0 | 17.0 | 17.0 | 17.0 | 17.0 | 17.0 | 17.0 | 17.0 |
| | | Nonionic side chain-containing diol | Preparation Example 2 | | - | - | - | - | - | - | - | - | - |
| | Organic solvent | | MEK | | 126.9 | 126.9 | 126.9 | 126.9 | 126.9 | 126.9 | 126.9 | 126.9 | 126.9 |
| | | | AN | | - | - | - | - | - | - | - | - | - |
| | Primary neutralizing agent (neutralizing agent) | Tertiary monoamine | TEA | | 12.6 | 12.6 | 12.6 | 12.6 | 12.6 | 12.6 | 12.6 | 12.6 | 12.6 |
| | Ion-exchange water | | | | 1050.0 | 1050.0 | 1050.0 | 1050.0 | 1050.0 | 1050.0 | 1050.0 | 1050.0 | 1050.0 |
| | Chain extender | Ion-exchange water | | | 50.0 | 50.0 | 50.0 | 50.0 | 50.0 | 50.0 | 50.0 | 50.0 | 50.0 |
| | | Amino alcohol | 2-(2-aminoethylamino)ethanol | | 24.8 | 24.8 | 24.8 | 24.8 | 24.8 | 24.8 | 24.8 | 24.8 | 24.8 |
| | | Polyamine | Ethylene diamine | | - | - | - | - | - | - | - | - | - |
| | | Amino group containing alkoxysilyl compound | N 2 (aminoethyl) 3 aminopropyltrimethoxysilane | | - | - | - | - | - | - | - | - | - |
| | Secondary neutralizing agent | Primary to secondary monoamine | 1-ethylamine(C2) | | 5.6 | - | - | - | - | - | - | - | - |
| | | | 1-propylamine(C3) | | - | 7.3 | - | - | - | - | - | - | - |
| | | | 1-butylamine(C4) | | - | - | 9.1 | - | - | - | - | - | - |
| | | | t-butylamine(C4) | | - | - | - | 9.1 | - | - | - | - | - |
| | | | Diethylamine(C4) | | - | - | - | - | 9.1 | - | - | - | - |
| | | | Hexylamine(C6) | | - | - | - | - | - | 12.6 | - | - | - |
| | | | Cyclohexylamine(C6) | | - | - | - | - | - | - | 12.6 | - | - |
| | | | Dipropylamine(C6) | | - | - | - | - | - | - | - | 12.6 | - |
| | | | Dibutylamine(C8) | | - | - | - | - | - | - | - | - | 16.0 |
| | | | KBE-903(C3) | | - | - | - | - | - | - | - | - | - |
| | End-capping agent (neutralizing agent) | Primary to secondary monoamine | 1-propylamine(C3) | | - | - | - | - | - | - | - | - | - |
| | Total amount | | | | 862.3 | 863.7 | 865.3 | 865.3 | 865.3 | 868.3 | 868.3 | 868.3 | 871.3 |
| Physical properties | Isocyanate group concentration in prepolymer synthesis step | | | (% by mass) | 6.1 | 6.1 | 6.1 | 6.1 | 6.1 | 6.1 | 6.1 | 6.1 | 6.1 |
| | Concentration of urethane and urea groups | | | (% by mass) | 40.9 | 40.7 | 40.4 | 40.4 | 40.4 | 39.9 | 39.9 | 39.9 | 39.5 |
| | Average particle diameter | | | (nm) | 55 | 49 | 52 | 50 | 51 | 55 | 55 | 64 | △116 |
| | Tertiary monoamine concentration | | | (% by mass) | 0.20 | 0.19 | 0.19 | 0.19 | 0.20 | 0.20 | 0.20 | 0.20 | 0.19 |
| | Primary to secondary monoamine concentration | | | (% by mass) | 0.56 | 0.74 | 0.91 | 0.91 | 0.90 | 1.25 | 1.25 | 1.25 | 1.60 |
| | Primary to secondary monoamine/neutralizing agent | | | (mol%) | 86.2 | 86.9 | 86.9 | 86.9 | 86.2 | 86.2 | 86.2 | 86.2 | 86.9 |
| | Number average molecular weight | | | - | 975000 | 991000 | 964000 | 1005000 | 953000 | 994000 | 1001000 | 998000 | 945000 |
| | Carbonate ion concentration | | | (ppm) | 420 | 360 | 450 | 470 | 520 | 390 | 400 | 410 | 370 |
| Evaluations | Storage stability | | | 1 to 5 | 5 | 5 | 5 | 5 | 5 | 5 | 5 | 4 | 3 |
| | Water resistance | | | Number of rubs (times) | 10 | 10 | 10 | 10 | 10 | 10 | 10 | 10 | 10 |

[Table 2]

[Table 2]

Table 2

| No. | | | | Example 10 | Example 11 | Example 12 | Example 13 | Example 14 | Example 15 | Example 16 | Example 17 | Example 18 |
|---|---|---|---|---|---|---|---|---|---|---|---|---|
| PUD | | | | PUD10 | PUD11 | PUD12 | PUD13 | PUD14 | PUD15 | PUD16 | PUD17 | PUD18 |
| Blending formulations (parts by mass) | Polyisocyanate component | | m-XDI | 148.2 | 148.2 | 148.2 | 148.2 | - | 148.2 | 148.2 | 74.1 | 25.2 |
| | | | $H_{12}$MDI | 25.8 | 25.8 | 25.8 | 25.8 | - | 25.8 | 25.8 | 25.8 | 25.8 |
| | | | HDI | - | - | - | - | - | - | - | 66.2 | 112.5 |
| | | | $H_6$XDI | - | - | - | - | 37.3 | - | - | - | - |
| | Active hydrogen group-containing component | Low molecular weight polyol | Ethylene glycol | 29.9 | 29.9 | 29.9 | 29.9 | - | 18.0 | 20.2 | 30.1 | 30.8 |
| | | | Triethylene glycol | - | - | - | - | - | - | - | - | - |
| | | | Trimethylol propane | 2.3 | 2.3 | 2.3 | 2.3 | - | 2.3 | 2.3 | 2.3 | 2.3 |
| | | | D-400 | - | - | - | - | - | 65.0 | 53.0 | - | - |
| | | High molecular weight polyol | UH200 | - | - | - | - | 201.3 | - | - | - | - |
| | | | Preparation Example 1 | - | - | - | - | - | - | - | - | - |
| | | Carboxy group-containing diol | Dimethylol propionic acid | 17.0 | 17.0 | 17.0 | 17.0 | 4.7 | 20.9 | 20.2 | 16.4 | 16.3 |
| | | Nonionic side chain-containing diol | Preparation Example 2 | - | - | - | - | - | - | - | - | - |
| | Organic solvent | | MEK | 126.9 | 126.9 | 126.9 | 126.9 | - | 159.2 | 153.2 | 122.3 | 119.5 |
| | | | AN | - | - | - | - | 458.5 | - | - | - | - |
| | Primary neutralizing agent (neutralizing agent) | Tertiary monoamine | TEA | 12.6 | 12.6 | 12.6 | 12.6 | 3.5 | 15.5 | 14.9 | 12.2 | 12.1 |
| | Ion-exchange water | | | 1050.0 | 1050.0 | 1050.0 | 1050.0 | - | 1050.0 | 1050.0 | 1050.0 | 1050.0 |
| | Chain extender | Ion-exchange water | | - | 50.0 | 50.0 | 50.0 | 6.2 | 50.0 | 50.0 | 50.0 | 50.0 |
| | | Amino alcohol | 2-(2-aminoethylamino)ethanol | - | 24.8 | 24.8 | 24.8 | - | 24.8 | 24.8 | 24.8 | 25.2 |
| | | Polyamine | Ethylene diamine | - | - | - | - | - | - | - | - | - |
| | | Amino group-containing alkoxysilyl compound | N-2-(aminoethyl)-3-aminopropyltrimethoxysilane | - | - | - | - | - | - | - | - | - |
| | Secondary neutralizing agent | Primary to secondary monoamine | 1-ethylamine(C2) | - | - | - | - | - | - | - | - | - |
| | | | 1-propylamine(C3) | - | 7.3 | 1.7 | 2.6 | 2.1 | 9.0 | 8.7 | 7.1 | 7.1 |
| | | | 1-butylamine(C4) | - | - | - | - | - | - | - | - | - |
| | | | t-butylamine(C4) | - | - | - | - | - | - | - | - | - |
| | | | Diethylamine(C4) | - | - | - | - | - | - | - | - | - |
| | | | Hexylamine(C6) | - | - | - | - | - | - | - | - | - |
| | | | Cyclohexylamine(C6) | - | - | - | - | - | - | - | - | - |
| | | | Dipropylamine(C6) | - | - | - | - | - | - | - | - | - |
| | | | Dibutylamine(C8) | - | - | - | - | - | - | - | - | - |
| | | | KBE-903(C3) | - | - | - | - | - | - | - | - | - |
| | End-capping agent (neutralizing agent) | Primary to secondary monoamine | 1-propylamine(C3) | 37.3 | - | - | - | - | - | - | - | - |
| | Total amount | | | 810.5 | 863.9 | 867.1 | 866.9 | 832.1 | 845.9 | 849.2 | 835.4 | 829.5 |
| Physical properties | Isocyanate group concentration in prepolymer synthesis step | | (% by mass) | 6.1 | 6.1 | 6.1 | 6.1 | 0.7 | 4.8 | 5.0 | 6.3 | 6.5 |
| | Concentration of urethane and urea groups | | (% by mass) | 40.0 | 40.6 | 40.1 | 40.2 | 9.1 | 33.0 | 34.2 | 42.0 | 43.0 |
| | Average particle diameter | | (nm) | 48 | 51 | 55 | 54 | 61 | 78 | 55 | 53 | 92 |
| | Tertiary monoamine concentration | | (% by mass) | 0.0 | 0.22 | 1.13 | 1.07 | 0.06 | 0.25 | 0.26 | 0.20 | 0.20 |
| | Primary to secondary monoamine concentration | | (% by mass) | 4.75 | 0.72 | 0.18 | 0.22 | 0.21 | 0.92 | 0.87 | 0.73 | 0.73 |
| | Primary to secondary monoamine/neutralizing agent | | (mol%) | 87.5 | 84.8 | 21.6 | 26.2 | 85.8 | 86.2 | 85.1 | 86.2 | 86.2 |
| | Number average molecular weight | | - | 580 | 977000 | 1011000 | 949000 | 1089000 | 993000 | 971000 | 966000 | 1018000 |
| | Carbonate ion concentration | | (ppm) | 440 | 760 | 310 | 350 | 210 | 440 | 420 | 380 | 340 |
| Evaluations | Storage stability | | 1 to 5 | 5 | 3 | 3 | 5 | 5 | 3 | 5 | 5 | 3 |
| | Water resistance | | Number of rubs (times) | 2 | 10 | 10 | 10 | 10 | 10 | 10 | 10 | 10 |

Table 3

| | | | | Example 19 | Example 20 | Example 21 | Example 22 | Example 23 | Example 24 | Comp. Ex. 1 | Comp. Ex. 2 |
|---|---|---|---|---|---|---|---|---|---|---|---|
| No. / PUD | | | | PUD19 | PUD20 | PUD21 | PUD22 | PUD23 | PUD24 | PUD25 | PUD26 |
| Blending formulations (parts by mass) | Active hydrogen group-containing component | Polyisocyanate component | m-XDI | 148.2 | 148.2 | 148.2 | 148.2 | - | 148.2 | 148.2 | 148.2 |
| | | | $H_{12}$MDI | 25.8 | 25.8 | 25.8 | 25.8 | 90.0 | 25.8 | 25.8 | 25.8 |
| | | | HDI | - | - | - | - | - | - | - | - |
| | | | $H_6$XDI | - | - | - | - | - | - | - | - |
| | | Low molecular weight polyol | Ethylene glycol | 29.9 | 29.9 | 29.9 | 29.9 | - | 30.9 | 29.9 | 29.9 |
| | | | Triethylene glycol | - | - | - | - | 2.4 | - | - | - |
| | | | Trimethylol propane | 2.3 | 2.3 | 2.3 | 2.3 | - | 2.4 | 2.3 | 2.3 |
| | | | D-400 | - | - | - | - | - | - | - | - |
| | | High molecular weight polyol | UH200 | - | - | - | - | - | - | - | - |
| | | | Preparation Example 1 | - | - | - | - | 161.0 | - | - | - |
| | | Carboxy group-containing diol | Dimethylol propionic acid | 17.0 | 17.0 | 17.0 | 17.0 | 22 | 6.87 | 17.0 | 17.0 |
| | | Nonionic side chain-containing diol | Preparation Example 2 | - | - | - | - | | 43.5 | - | - |
| | Organic solvent | | MEK | 126.2 | 126.9 | 126.9 | 126.2 | 165.0 | 141.5 | 126.9 | 126.2 |
| | | | AN | - | - | - | - | | | - | - |
| | Primary neutralizing agent (neutralizing agent) | Tertiary monoamine | TEA | 12.6 | 12.6 | 12.6 | 12.6 | 11.4 | 5.1 | 12.6 | 12.6 |
| | Ion-exchange water | | | 1050.0 | 1050.0 | 1050.0 | 1050.0 | 900.0 | 1050.0 | 1050.0 | 1050.0 |
| | Chain extender | Ion-exchange water | | 50.0 | 50.0 | 50.0 | 50.0 | 50.0 | 50.0 | 50.0 | 50.0 |
| | | Amino alcohol | 2-(2-aminoethylamino)ethanol | - | 24.8 | 24.8 | - | - | 27.0 | 24.8 | - |
| | | Polyamine | Ethylene diamine | 14.3 | - | - | 14.3 | 4.3 | - | - | 14.3 |
| | | Amino group-containing alkoxysilyl compound | N-2-(aminoethyl)-3-aminopropyltrimethoxysilane | - | - | - | - | 7.1 | - | - | - |
| | Secondary neutralizing agent | Primary to secondary monoamine | 1-ethylamine(C2) | - | - | - | - | - | - | - | - |
| | | | 1-propylamine(C3) | 7.3 | - | 11.7(1 time)/7.3(2 times) | 11.7(1 time)/7.3(2 times) | 10.7(1 time)/6.7(2 times) | 3.0 | - | - |
| | | | 1-butylamine(C4) | - | - | - | - | - | - | - | - |
| | | | t-butylamine(C4) | - | - | - | - | - | - | - | - |
| | | | Diethylamine(C4) | - | - | - | - | - | - | - | - |
| | | | Hexylamine(C6) | - | - | - | - | - | - | - | - |
| | | | Cyclohexylamine(C6) | - | - | - | - | - | - | - | - |
| | | | Dipropylamine(C6) | - | - | - | - | - | - | - | - |
| | | | Dibutylamine(C8) | - | - | - | - | - | - | - | - |
| | | | KBE-903(C3) | - | 27.5 | - | - | - | - | - | - |
| | End-capping agent (neutralizing agent) | Primary to secondary monoamine | 1-propylamine(C3) | - | - | - | - | - | - | - | - |
| | Total amount | | | 828.8 | 863.7 | 863.1 | 828.8 | 989.2 | 964.2 | 0.0 | 0.0 |
| Physical properties | Isocyanate group concentration in prepolymer synthesis step | | (% by mass) | 6.1 | 6.1 | 6.1 | 6.1 | 1.9 | 5.8 | 6.1 | 6.1 |
| | Concentration of urethane and urea groups | | (% by mass) | 45.0 | 40.7 | 40.8 | 45.0 | 13.7 | 36.1 | 42.0 | 46.6 |
| | Average particle diameter | | (nm) | 45 | 68 | 51 | 45 | 50 | 49 | 55 | 45 |
| | Tertiary monoamine concentration | | (% by mass) | 0.20 | 0.19 | 0.01 | 0.20 | 0.01 | 0.06 | 1.5 | 0.00 |
| | Primary to secondary monoamine concentration | | (% by mass) | 0.77 | 0.74 | 0.85 | 0.77 | 0.67 | 0.27 | - | - |
| | Primary to secondary monoamine/neutralizing agent | | (mol%) | 86.7 | 86.9 | 99.6 | 99.6 | 99.6 | 89.2 | - | - |
| | Number average molecular weight | | - | 1002000 | 1021000 | 966000 | 1025000 | 995000 | 991000 | 987000 | 1015000 |
| | Carbonate ion concentration | | (ppm) | 360 | 410 | 430 | 380 | 180 | 420 | 430 | 390 |
| Evaluations | Storage stability | | 1 to 5 | 5 | 4 | 5 | 5 | 5 | 5 | 2 | 2 |
| | Water resistance | | Number of rubs (times) | 10 | 10 | 10 | 10 | 10 | 10 | 10 | 10 |

[Table 4]

Table 4

| | | | | Example 26 | Example 27 | Example 28 | Example 29 | Example 30 | Example 31 |
|---|---|---|---|---|---|---|---|---|---|
| | No. | | | | | | | | |
| Polyolefin substrate | | | | BOPP | BOPP | BOPP | BOPP | BOPP | BOPP |
| Anchor coat layer (Polyurethane layer) | Preparation Example | | | AC1 | AC2 | AC3 | AC4 | AC5 | AC6 |
| | Blending formulations (parts by mass) | PUD | Example 23 | 33.3 | 30.0 | 27.6 | 28.3 | 27.6 | 27.6 |
| | | Aqueous solvent | 2-propanol | 15.0 | 15.0 | 15.0 | 15.0 | 15.0 | 15.0 |
| | | Water | Ion-exchange water | 51.7 | 54.0 | 53.2 | 55.2 | 53.2 | 53.2 |
| | | Curing agent | KBM-403 | - | 1.0 | - | - | - | - |
| | | | CARBODILITE SV-02 | - | - | 4.2 | - | 4.2 | 4.2 |
| | | | Byhdur3100 | - | - | - | 1.5 | - | - |
| | Film thickness | | g/m² | 1.0 | 1.0 | 1.0 | 1.0 | 1.0 | 1.0 |
| Vapor deposition layer | Types | | | AL | AL | AL | AL | SIOx | AlOx |
| Overcoat layer (Polyurethane layer) | Preparation Example | | | OC1 | OC2 | OC3 | OC4 | OC5 | OC6 |
| | Blending formulations (parts by mass) | PUD | Example 23 | 33.3 | 30.0 | 27.6 | 28.3 | 27.6 | 27.6 |
| | | Aqueous solvent | 2-propanol | 15.0 | 15.0 | 15.0 | 15.0 | 15.0 | 15.0 |
| | | Water | Ion-exchange water | 51.7 | 54.0 | 53.2 | 55.2 | 53.2 | 53.2 |
| | | Curing agent | KBM-403 | - | 1.0 | - | - | - | - |
| | | | CARBODILITE SV-02 | - | - | 4.2 | - | 4.2 | 4.2 |
| | | | Bayhydur3100 | - | - | - | 1.5 | - | - |
| | Overcoat film thickness | | g/m² | 1.0 | 1.0 | 1.0 | 1.0 | 1.0 | 1.0 |
| Evaluations | Gas barrier properties | Oxygen transmission rate before hydrothermal treatment | cc/(m²·day·atm) | 1.0 | 1.0 | 1.0 | 1.0 | 1.0 | 1.1 |
| | | Oxygen transmission rate after hydrothermal treatment | cc/(m²·day·atm) | 1.5 | 1.4 | 1.2 | 1.6 | 1.2 | 1.5 |
| | | Increase rate of oxygen transmission rate | % | 50% | 40% | 20% | 60% | 20% | 36% |
| | Adhesiveness | Peel strength before hydrothermal treatment | N/mm² | 2.0 | 2.1 | 2.2 | 2.1 | 2.1 | 2.8 |
| | | Peel strength after hydrothermal treatment | N/mm² | 2.2 | 2.2 | 2.4 | 2.2 | 2.3 | 2.6 |

Table 5]

Table 5

| No. | | | | Example 32 |
|---|---|---|---|---|
| Polyolefin substrate | | | | BOPP |
| Gas barrier layer | Blending formulations (parts by mass) | PUD | Example 23 | 27.6 |
| | | Aqueous solvent | 2-propanol | 15.0 |
| | | Water | Ion-exchange water | 53.2 |
| | | Curing agent | CARBODILITE SV-02 | 4.2 |
| | Film thickness | | $g/m^2$ | 3 |
| Evaluations | Oxygen transmission rate | | cc/($m^2$·day·atm) | 26 |

[Table 6]

Table 6

| No. | | Example 33 | Example 34 |
|---|---|---|---|
| Substrate | Paper | Machine glazed kraft paper | Machine glazed kraft paper |
| Sealing layer | Thickness ($g/m^2$) | 10 | 10 |
| Gas barrier layer | Preparation Example | BCI | BC2 |
| | Thickness ($g/m^2$) | 3 | 3 |
| Heat seal layer | Thickness ($g/m^2$) | 2 | 2 |
| Oxygen barrier properties | 20°C 80RH% | 1.0 | 1.0 |
| Water vapor barrier properties | 40°C 90RH% | 12 | 14 |
| Heat-seal strength | kg/15mm | 2 | 2 |

The details of abbreviations in Tables are as follows.

PUD; polyurethane dispersion (including the secondary polyurethane dispersion)

m-XDI;1,3-xylylene diisocyanate

$H_{12}$MDI; methylenebis(cyclohexyl isocyanate)

HDI; hexamethylene diisocyanate

$H_6$XDI; bis(isocyanatomethyl)cyclohexane

D-400; trade name Actocol D-400, polyoxypropylene glycol, number-average molecular weight 400 (low molecular weight polyol), manufactured by Mitsui Chemical SKC Polyurethane Co., Ltd

UH200; ETERNACOLL UH-200, polycarbonate diol, number-average molecular weight 2000 (high molecular weight polyol), manufactured by UBE Corporation

MEK; methyl ethyl ketone
AN; acetonitrile
TEA; triethylamine

C; the total number of carbon atoms of the hydrocarbon group bonded to the primary amino group or the secondary amino group

KBE-903; 3-aminopropyltriethoxysilane, Shin-Etsu Silicone

BOPP; polyolefin substrate, biaxially oriented polypropylene film, trade name Pyrene film OT P2171, thickness 30μm, manufactured by TOYOBO CO., LTD.

AL; aluminum

AlOx; aluminium oxide

SiOx; silicon oxide

KBM-403: trade name, epoxy curing agent, 3-glycidoxypropyltrimethoxysilane, silane coupling agent containing epoxy group, Shin-Etsu Chemical Co., Ltd.

CARBODILITE SV-02; trade name, carbodiimide curing agent, solid content concentration 40% by weight, manufactured by Nisshinbo Chemical Inc.

Bayhydur3100: trade name, isocyanate curing agent, manufactured by BASF

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

Industrial Applicability

The polyurethane dispersion, the gas barrier coating material, and the method for producing a polyurethane dispersion of the present invention are preferably used in the production of a laminate.

## Claims

1. A polyurethane dispersion comprising: a polyurethane resin,

   wherein the polyurethane resin contains a reaction product of an isocyanate group-terminated prepolymer with a chain extender and/or an end-capping agent,
   wherein the isocyanate group-terminated prepolymer contains a reaction product of a polyisocyanate component with an active hydrogen group-containing component,
   wherein the active hydrogen group-containing component contains a polyol compound and an active hydrogen group-containing compound containing an anionic group,
   wherein the anionic group is neutralized by a neutralizing agent, and
   wherein the neutralizing agent contains a monoamine compound having a primary amino group or a secondary amino group.

2. The polyurethane dispersion according to claim 1,
   wherein in the monoamine compound, a total number of carbon atoms of a hydrocarbon group bonded to a primary amine group and a secondary amine group is 2-6.

3. The polyurethane dispersion according to claim 1,
   wherein the polyurethane resin has a number-average molecular weight of 700 or more.

4. The polyurethane dispersion according to claim 1,
   wherein the polyurethane dispersion has a carbonate ion concentration of 700ppm or less.

5. The polyurethane dispersion according to claim 1,
   wherein the anionic group is a carboxy group.

6. The polyurethane dispersion according to claim 1,
   wherein a content ratio of the monoamine compound having a primary amino group or a secondary amino group is 25 mol% or more with respect to total moles of the neutralizing agent.

7. The polyurethane dispersion according to claim 1,

   wherein the polyisocyanate component contains bis(isocyanatomethyl)cyclohexane and/or xylylene diisocyanate, and

wherein the polyol compound contains a short chain diol having 2 to 6 carbon atoms.

8. The polyurethane dispersion according to claim 1,
   wherein the polyurethane resin has a concentration of urethane and urea groups of 33% by mass or more and 42% by mass or less.

9. A gas barrier coating material comprising: the polyurethane dispersion according to claim 7.

10. A method for producing a polyurethane dispersion containing a polyurethane resin, the method comprising:

   a prepolymer synthesis step of reacting a polyisocyanate component with an active hydrogen group-containing component containing a polyol compound and an active hydrogen group-containing compound containing an anionic group to synthesize an isocyanate group-terminated prepolymer;
   a neutralization step of, after the prepolymer synthesis step, neutralizing the anionic group by a primary neutralizing agent containing a monoamine compound having a tertiary amino group;
   a chain extension step of, after the neutralization step, reacting the isocyanate group-terminated prepolymer with a chain extender to obtain a polyurethane resin; and
   a substitution step of, after the chain extension step, substituting at least a part of the primary neutralizing agent with a secondary neutralizing agent containing a monoamine compound having a primary amino group or a secondary amino group.

## INTERNATIONAL SEARCH REPORT

| International application No. |
| --- |
| **PCT/JP2024/006512** |

| A. | CLASSIFICATION OF SUBJECT MATTER |
| --- | --- |

*C08L 75/04*(2006.01)i; *C08G 18/00*(2006.01)i; *C08G 18/08*(2006.01)i; *C08G 18/12*(2006.01)i; *C09D 5/02*(2006.01)i; *C09D 175/04*(2006.01)i
FI:  C08L75/04; C08G18/00 C; C08G18/12; C08G18/08 019; C09D175/04; C09D5/02

According to International Patent Classification (IPC) or to both national classification and IPC

| B. | FIELDS SEARCHED |
| --- | --- |

Minimum documentation searched (classification system followed by classification symbols)

C08L75/04; C08G18/00; C08G18/08; C08G18/12; C09D5/02; C09D175/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2000-169701 A (SANYO CHEMICAL INDUSTRIES, LTD.) 20 June 2000 (2000-06-20) claims 1-5, paragraphs [0003], [0005], [0007], [0009], [0010], example 1 | 1-8, 10 |
| Y | | 1-10 |
| X | JP 2013-518136 A (BAYER INTELLECTUAL PROPERTY GMBH) 20 May 2013 (2013-05-20) claims 1-6, paragraphs [0034], [0035], examples | 1-8, 10 |
| Y | | 1-10 |
| X | JP 2010-143946 A (NIPPON POLYURETHANE IND CO., LTD.) 01 July 2010 (2010-07-01) claim 1, paragraphs [0012]-[0014], example 1 | 1-8, 10 |
| Y | | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 April 2024** | **07 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 678 697 A1

## INTERNATIONAL SEARCH REPORT

| International application No. |
|---|
| **PCT/JP2024/006512** |

### C. DOCUMENTS CONSIDERED TO BE RELEVANT

| Category* | Citation of document, with indication, where appropriate, of the relevant passages | Relevant to claim No. |
|---|---|---|
| X | WO 2018/173637 A1 (ADEKA CORPORATION) 27 September 2018 (2018-09-27) claims 1, 5-7, paragraphs [0006], [0012], [0015], [0022], [0048], [0058], [0059], example 1 | 1-8, 10 |
| Y | | 1-10 |
| X | JP 2016-188362 A (SANYO CHEMICAL INDUSTRIES, LTD.) 04 November 2016 (2016-11-04) claims 1, 2, paragraphs [0018], [0024], [0025], [0044]-[0048], [0050], [0051], [0059], example 6, table 1 | 1-8, 10 |
| Y | | 1-10 |
| X | JP 2019-500433 A (E INK CORPORATION) 10 January 2019 (2019-01-10) example 2 | 1-8, 10 |
| Y | | 1-10 |
| X | JP 2015-182421 A (TORAY INDUSTRIES, INC.) 22 October 2015 (2015-10-22) claim 1, paragraphs [0078]-[0089], [0092]-[0098], [0145] | 1-8, 10 |
| Y | | 1-10 |
| X | JP 2005-187802 A (AIR PRODUCTS & CHEMICALS INC.) 14 July 2005 (2005-07-14) claims 1, 17, paragraphs [0016]-[0020], [0028]-[0031], [0050], table 1, examples 2-5, 9-11 | 1-8, 10 |
| Y | | 1-10 |
| Y | WO 2020/250768 A1 (MITSUI CHEMICALS, INC.) 17 December 2020 (2020-12-17) claims 1, 2, 5, paragraphs [0005]-[0011], [0050], [0087]-[0090], tables 1, 2 | 1-10 |
| P, X | JP 2023-135164 A (MITSUI CHEMICALS, INC.) 28 September 2023 (2023-09-28) claims 1-4, examples | 1-2, 6-7, 10 |

Form PCT/ISA/210 (second sheet) (July 2022)

35

## INTERNATIONAL SEARCH REPORT
### Information on patent family members

International application No.

**PCT/JP2024/006512**

| Patent document cited in search report | | | Publication date (day/month/year) | Patent family member(s) | | Publication date (day/month/year) |
|---|---|---|---|---|---|---|
| JP | 2000-169701 | A | 20 June 2000 | (Family: none) | | |
| JP | 2013-518136 | A | 20 May 2013 | US 2012/0289650 A1<br>claims 9-15, paragraphs<br>[0039], [0040], examples<br>EP 2348059 A1<br>KR 10-2012-0123362 A | | |
| JP | 2010-143946 | A | 01 July 2010 | (Family: none) | | |
| WO | 2018/173637 | A1 | 27 September 2018 | CN 110225933 A<br>KR 10-2019-0123260 A<br>TW 201840620 A | | |
| JP | 2016-188362 | A | 04 November 2016 | (Family: none) | | |
| JP | 2019-500433 | A | 10 January 2019 | US 2017/0088758 A1<br>example 2<br>EP 3356445 A1<br>TW 201718811 A<br>KR 10-2018-0045032 A<br>CN 108138023 A | | |
| JP | 2015-182421 | A | 22 October 2015 | (Family: none) | | |
| JP | 2005-187802 | A | 14 July 2005 | US 2005/0107564 A1<br>claims 1, 17, paragraphs<br>[0017]-[0021], [0028]-[0030],<br>[0048], table 1, examples 2-5,<br>9-11<br>EP 1533329 A1<br>KR 10-2005-0048479 A<br>CN 1637035 A | | |
| WO | 2020/250768 | A1 | 17 December 2020 | US 2022/0325059 A1<br>claims 1, 2, 5, paragraphs<br>[0005]-[0011], [0051], [0088]-<br>[0091], tables 1, 2<br>EP 3985041 A1<br>CN 113906076 A | | |
| JP | 2023-135164 | A | 28 September 2023 | (Family: none) | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020250768 A